(19) Europäisches Patentamt
European Patent Office
Office européen des brevets

(11) **EP 1 652 104 B1**

(12) **EUROPÄISCHE PATENTSCHRIFT**

(45) Veröffentlichungstag und Bekanntmachung des Hinweises auf die Patenterteilung:
**16.07.2008 Patentblatt 2008/29**

(21) Anmeldenummer: **04762596.7**

(22) Anmeldetag: **04.08.2004**

(51) Int Cl.:
***G06F 15/173*** *(2006.01)*

(86) Internationale Anmeldenummer:
**PCT/DE2004/001751**

(87) Internationale Veröffentlichungsnummer:
**WO 2005/015427 (17.02.2005 Gazette 2005/07)**

(54) **PROZESSOR-ANORDNUNG, TEXTILGEWEBESTRUKTUR, FLÄCHENVERKLEIDUNGSSTRUKTUR UND VERFAHREN ZUM ÜBERTRAGEN VON ELEKTRONISCHEN NACHRICHTEN ZWISCHEN PROZESSOREN EINER PROZESSOR-ANORDNUNG**

PROCESSOR ASSEMBLY, FABRIC STRUCTURE, SURFACE-COVERING STRUCTURE AND METHOD FOR TRANSMITTING ELECTRONIC MESSAGES BETWEEN THE PROCESSORS OF A PROCESSOR ASSEMBLY

ENSEMBLE DE PROCESSEURS, STRUCTURE DE TISSU TEXTILE, STRUCTURE DE REVETEMENT DE SURFACE ET PROCEDE DE TRANSMISSION DE MESSAGES ELECTRONIQUES ENTRE LES PROCESSEURS D'UN ENSEMBLE DE PROCESSEURS

(84) Benannte Vertragsstaaten:
**DE**

(30) Priorität: **05.08.2003 DE 10335819**

(43) Veröffentlichungstag der Anmeldung:
**03.05.2006 Patentblatt 2006/18**

(73) Patentinhaber: **Infineon Technologies AG 81669 München (DE)**

(72) Erfinder:
• **STROMBERG, Guido 80469 München (DE)**
• **STURM, Thomas 85551 Kirchheim (DE)**

(74) Vertreter: **Viering, Jentschura & Partner Postfach 22 14 43 80504 München (DE)**

(56) Entgegenhaltungen:
**EP-A- 1 308 905          WO-A-03/048953
US-B1- 6 515 586**

• **"QUANTUM FLOW CONTROL" QUANTUM FLOW CONTROL VERSION 2.0, XX, XX, 25. Juli 1995 (1995-07-25), Seite COMPLETE, XP002919915**
• **POMBORTSIS A ET AL: "A NOVEL FLOW CONTROL AND SWITCHING STRATEGY FOR PREVENTING HOTSPOT CONGESTION IN MULTISTAGE NETWORKS" MICROPROCESSORS AND MICROSYSTEMS, IPC BUSINESS PRESS LTD. LONDON, GB, Bd. 17, Nr. 7, 1. September 1993 (1993-09-01), Seiten 403-410, XP000397912 ISSN: 0141-9331**
• **DANDAMUDI S P: "REDUCING HOT-SPOT CONTENTION IN SHARED-MEMORY MULTPROCESSOR SYSTEMS" IEEE CONCURRENCY, IEEE SERVICE CENTER, PISCATAWAY, NY, US, Bd. 7, Nr. 1, Januar 1999 (1999-01), Seiten 48-59, XP000831488 ISSN: 1092-3063**
• **KATEVENIS M ET AL: "Switching fabrics with internal backpressure using the ATLAS I single-chip ATM switch" GLOBAL TELECOMMUNICATIONS CONFERENCE, 1997. GLOBECOM '97., IEEE PHOENIX, AZ, USA 3-8 NOV. 1997, NEW YORK, NY, USA,IEEE, US, 3. November 1997 (1997-11-03), Seiten 242-246, XP010254639 ISBN: 0-7803-4198-8**

**Beschreibung**

Die Erfindung betrifft eine Prozessor-Anordnung, eine Textilgewebestruktur, eine Flächenverkleidungsstruktur sowie ein Verfahren zum Übertragen von elektronischen Nachrichten zwischen Prozessoren einer Prozessor-Anordnung.

Bei einem Netzwerk aus Prozessoren, d.h. bei einer Prozessor-Anordnung mit einer Vielzahl von Prozessoren, welche in Form einer Baumstruktur miteinander gekoppelt sind, besteht das grundsätzliche Problem, dass bei der Versendung elektronischer Nachrichten, welche Nutzdaten enthalten, von einzelnen Netzwerkknoten, d.h. der einzelnen Prozessoren, an den Wurzel-Knoten (d.h. den Wurzel-Prozessor) Kollisionen der elektronischen Nachrichten und damit Staus bei der Weiterleitung der elektronischen Nachrichten auftreten können.

Bei einer Prozessor-Anordnung, bei der die Prozessoren in Form eines vollständigen Binärbaums angeordnet sind, verdoppelt sich beispielsweise die Anzahl eintreffender elektronischer Nachrichten mit der Tiefe des Baums, anders ausgedrückt, mit der Anzahl der Hierarchieebenen der Baumstruktur, so dass bei einer Baumtiefe von 20 bereits eine Million elektronischer Nachrichten auf einmal, d.h. zu einem vorgegebenen Zeitpunkt, wie beispielsweise einem Taktzeitpunkt, an den Wurzel-Knoten versendet werden können.

Ein Beispiel für eine solche Prozessor-Anordnung mit einer Vielzahl von in einer Baumstruktur miteinander gekoppelten Prozessoren ist ein selbstorganisierendes Netzwerk von uniformen Prozessoren, wie es beispielsweise in [1] beschrieben ist.

Gemäß [1] sind die einzelnen Prozessoren (Knoten) der Prozessor-Anordnung flächig in einem regulären Raster angeordnet, welches beliebige Fehler und Formen aufweisen kann.

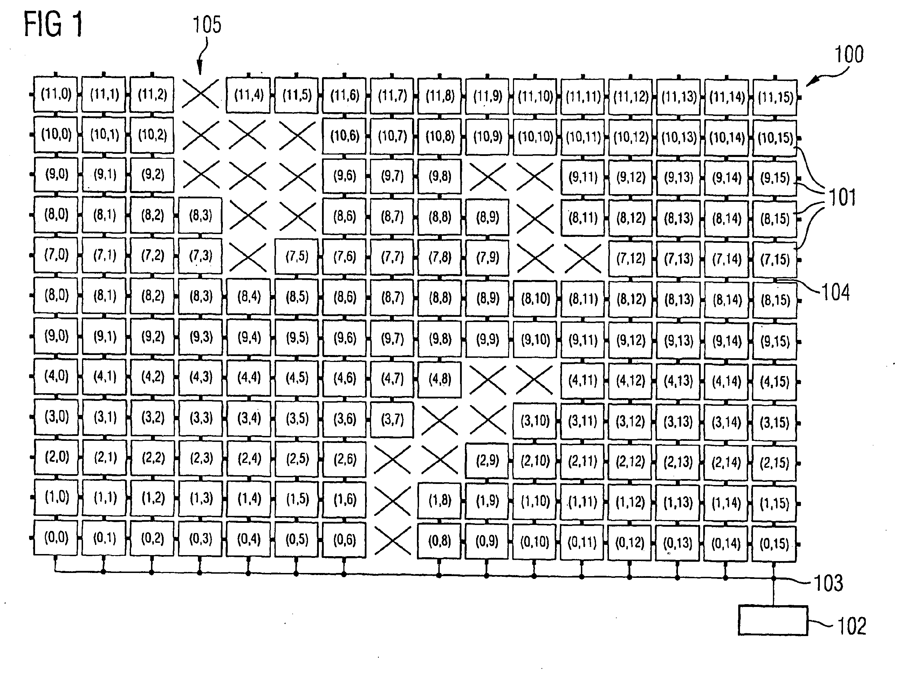

**Fig.1** zeigt eine Prozessor-Anordnung 100 gemäß [1] mit einer Vielzahl von Prozessorelementen 101, welche orthogonal miteinander vermascht sind. Dies bedeutet, dass jeweils ein Prozessorelement 101 mit maximal vier unmittelbar zu diesem benachbarten Prozessorelementen über eine bidirektionale Kommunikationsverbindung gekoppelt ist. Somit kann jedes Prozessorelement 101 der Prozessor-Anordnung 100 jeweils mit seinem unmittelbar benachbart angeordneten Prozessorelement, im Folgenden bezeichnet als Nachbarprozessorelement, elektronische Nachrichten austauschen.

Gemäß [1] wird im Rahmen eines Selbstorganisationsprozesses eine Baumstruktur ausgebildet, mittels der die geometrische Selbsterkennung und das Routing der elektronischen Nachrichten in dem Netzwerk, d.h. in der Prozessor-Anordnung 100, ermöglicht wird. Der Wurzel-Knoten wird von einem Schnittstellenprozessor 102, auch bezeichnet als Portal-Prozessor, gebildet.

Der Schnittstellenprozessor 102 ist gemäß [1] ein informationsverarbeitendes oder informationsgenerierendes System, wobei der Schnittstellenprozessor 102 eine Nachrichtenschnittstelle der Prozessor-Anordnung 100 bildet. Der Schnittstellenprozessor 102 ist mit mindestens einem Prozessorelement 101 der Prozessor-Anordnung 100 gekoppelt über eine bidirektionale Kommunikationsverbindung 103.

Die Kommunikationsverbindungen zwischen den Prozessorelementen 101 der Prozessor-Anordnung 100 sind mit dem Bezugszeichen 104 bezeichnet.

Jedes Prozessorelement 101 weist im Rahmen einer technischen Anwendung einen Prozessor sowie einen diesem zugeordneten Aktor, wie beispielsweise eine Display-Anordnung und/oder einen diesem zugeordneten Sensor auf (nicht gezeigt in Fig.1).

Fig.1 zeigt ferner fehlerhafte Prozessorelemente 105, in Fig.1 symbolisch dargestellt mit einem Kreuz.

Aufgrund des Selbstorganisationsprozesses, wie er in [1] beschrieben ist, ist es trotz der fehlerbehafteten Prozessoren 105 ermöglicht, ausgehend von jedem funktionstüchtigen Prozessorelement 101 innerhalb der Prozessor-Anordnung 100 elektronische Nachrichten zu dem Portal-Prozessor 102 zu übermitteln bzw. von dem Portal-Prozessor 102 eine elektronische Nachricht an jedes Prozessorelement 101 und damit an jeden Prozessor der Prozessor-Anordnung 100 zu senden.

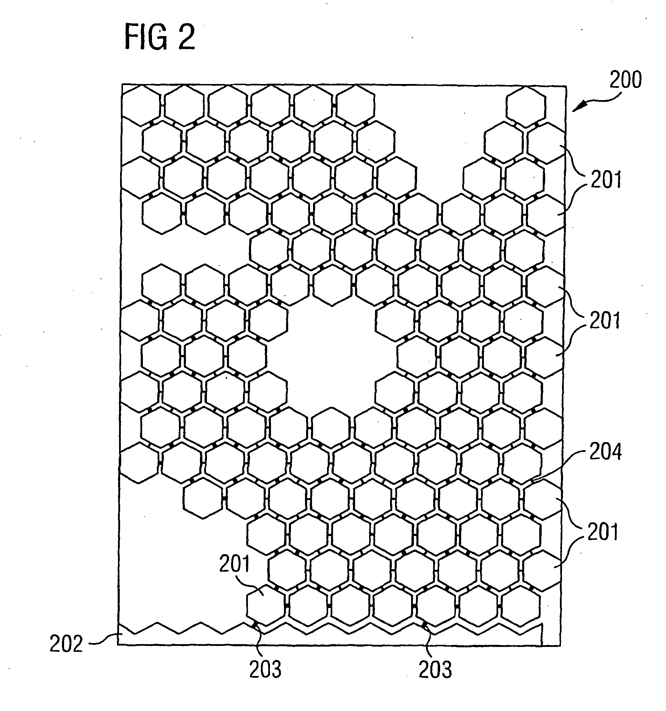

**Fig.2** zeigt eine andere Prozessor-Anordnung 200 gemäß [1], wobei die Prozessorelemente 201 gemäß dieser Ausgestaltung in Form einer hexagonalen Vermaschung miteinander gekoppelt sind, d.h. ein Prozessorelement 201 der Prozessor-Anordnung 200 ist mit sechs Nachbarprozessorelementen direkt gekoppelt. Wiederum ist ein Portal-Prozessor 202 als Nachrichtenschnittstelle für die Prozessoren 201 der Prozessor-Anordnung 200 vorgesehen.

Gemäß Fig.2 ist der Schnittstellenprozessor 202 mittels zweier bidirektionaler Kommunikationsverbindungen 203 mit zwei Prozessorelementen 201 der Prozessor-Anordnung 200 gekoppelt. Das Einspeisen von elektronischen Nachrichten ausgehend von dem Schnittstellenprozessor 202 zu den Prozessorelementen 201 und damit zu den Prozessoren der Prozessor-Anordnung 200 ist unkritisch hinsichtlich des Auftretens von Datenkollisionen, d.h. von Kollisionen elektronischer Nachrichten, da sich der Nachrichtenstrom ausgehend von dem Schnittstellenprozessor 202 in die Prozessor-Anordnung 200 hinein aufteilt.

Aus technischen und aufwandstechnischen Gründen kann pro Zeiteinheit, d.h. pro Zeittakt bei einer synchron getakteten Prozessor-Anordnung 200 nur eine vorgegebene Menge von elektronischen Nachrichten über eine Kommunikationsverbindung 204 zwischen zwei einander benachbarten und gekoppelten Prozessorelementen 201 übertragen werden und es kann nur eine vorgegebene Anzahl von elektronischen Nachrichten in einem Prozessorelement 201, genauer in einem dem jeweiligen Prozessor zugeordneten Pufferspeicher (nicht gezeigt) in dem Prozessorelement 201 zwischengespeichert werden.

Somit kann es bei einem Nachrichtenfluss der elektronischen Nachrichten ausgehend von einem Prozessorelement 201 der Prozessor-Anordnung 200 in Richtung des Wurzel-Knotens, d.h. in Richtung des Schnittstellenprozessors 202, bei unkontrollierter Übertragung der elektronischen Nachrichten zu Datenkollisionen, d.h. zu Kollisionen elektronischer Nachrichten, oder zu Pufferüberläufen bei den den Prozessorelementen 201 zugeordneten Pufferspeichern kommen.

Grundsätzlich besteht eine Möglichkeit der Reduzierung des Risikos des Auftretens von Datenkollisionen darin, die Pufferspeicher der Prozessoren 201 ausreichend groß zu dimensionieren.

Wird die Prozessor-Anordnung 100, 200 jedoch als ein Sensornetzwerk ausgestaltet, beispielsweise derart, dass mittels der Sensoren Bilddaten, Temperaturdaten oder Gewichtsdaten, d.h. Druckdaten, erfasst werden sollen und an den Schnittstellenprozessor 102, 202 übertragen werden sollen, bedeutet dies einen erheblichen Nachteil, da gegebenenfalls sehr große und damit teure Pufferspeicher für jeden Prozessor der Vielzahl von Prozessoren 101, 201 vorgesehen werden müssten, da die Prozessoranordnung 100, 200 im Prinzip beliebig groß ausgebildet sein kann.

Alternativ ist es vorstellbar, nur diejenigen Prozessorelemente, die sich örtlich nahe an dem Schnittstellenprozessor 102, 202 befinden, mit sehr großen Pufferspeichern zu versehen, da gerade in der örtlichen Nähe zu dem Schnittstellenprozessor 102, 202 ein Datenstau und die damit verbundenen Datenkollisionen zu erwarten sind. Bei einer solchen Architektur der Prozessor-Anordnung 100, 200 würde diese jedoch ihren Selbstorganisations-Charakter und ihre Flexibilität hinsichtlich der Anordnung der Prozessorelemente 101, 201 verlieren. Auch würde die Fehlertoleranz der gebildeten Prozessor-Anordnung 100, 200 erheblich reduziert werden. Ferner würde die jeweilige Gesamtheit eines Prozessorelements, gebildet aus einem Sensor und/oder Aktor und einem dem Sensor und/oder Aktor zugeordneten Prozessor 101, 201 gebildete Einheit nicht mehr durchgängig für alle Einheiten der Prozessor-Anordnung 100, 200 gleich ausgebildet sein.

In [2], [3] und [4] sind Sensornetzwerke auf Funkbasis beschrieben, bei denen jedoch keine reguläre Struktur vorhanden ist.

Zur Lösung des Problems auftretender Datenkollisionen wird gemäß diesen Veröffentlichungen eine Aggregation der Sensordaten verwendet, wobei man davon ausgeht, dass die ermittelten und zu einem Wurzel-Knoten zu übertragenden Sensordaten eine hohe Redundanz aufgrund der örtlichen Nähe der einzelnen Knoten, bei denen die Sensordaten erfasst wurden, aufweisen und die Sensordaten somit zusammengefasst werden können.

Auf diese Weise werden somit eintreffende elektronische Nachrichten von einem Prozessor, d.h. von einem Netzwerkknoten, nicht weitergeleitet, sondern zu einer einzelnen elektronischen Nachricht zusammengefasst und nur diese einzelne Nachricht wird weiter gesendet.

Der Hauptnachteil dieser Vorgehensweise ist in dem dabei eintretenden Informationsverlust zu sehen.

Insbesondere ist zu bemerken, dass leistungsschwache Prozessoren, d.h. Prozessoren mit einer geringen Rechenleistung und mit nur einem sehr kleinen zur Verfügung stehenden Pufferspeicher nur eine lokale (Daten-)Sicht haben und zudem keine komplizierten und rechenaufwendigen Verarbeitungsalgorithmen durchführen können.

Ferner sollten beispielsweise aufgenommene Bilddaten global an alle Prozessoren in einer Prozessor-Anordnung verarbeitet werden, da sonst allenfalls eine genau organisierte Blockstruktur der Prozessoren Bildverarbeitungsverfahren sinnvoll verwenden könnte.

Ein anderes Beispiel ist in einer Druckmessung zu sehen, wenn eine Person über beispielsweise einen Teppich mit darin integrierten Drucksensoren geht. Die Gesamtmenge der erfassten Messdaten über eine vorgegebene Zeitspanne kann wie ein Fingerabdruck mit in einer Datenbank gespeicherten Referenzdaten verglichen werden, um auf die Person Rückschlüsse ziehen zu können, wobei dies bei einer Aggregation von Sensordaten nicht möglich wäre, da ein hohes Informationsdefizit aufgrund des Informationsverlustes vorhanden wäre.

In [5] ist das sogenante Quantum Flow Control (QFC) Protokoll für ATM (Asynchronous Transfer Mode) Netzwerke beschrieben, bei dem die Besetzung von Pufferspeichern einzelner NetzwerkKnoten überwacht und somit durch eventuelle Datenstaus bedingte Datenverluste in dem Netzwerk vermieden werden. In [5] ist beschrieben, dass ein Sender (Transmitter node) zu einem gegebenen Zeitpunkt nur dann Nachrichten (cells) über eine Datenverbindung (connection) an einen Empfänger (Receiver node) übermittelt, wenn der verfügbare Speicherplatz in einem der Datenverbindung zugeordneten Pufferspeicher des Empfängers zum Empfangen der Nachrichten ausreicht. Dazu sendet der Empfänger Pufferzustands-Aktualisierungs-Nachrichten (Buffer State Update messages) an den Sender, aus denen der Sender ermitteln kann, ob zu dem gegebenen Zeitpunkt Nachrichten über die Daten verbindung an den Empfänger gesendet werden können oder nicht.

In [6] ist ein Multistage Interconnection Network (MIN) mit einer Mehrzahl von Schaltelementen (Switching Elements) offenbart, sowie einem Flusskontrollen-basierten Mechanismus zum Vermeiden einer Überfüllung von Pufferspeichern, wobei im Rahmen eines Rückkopplungsmechanismus' jedes Schaltelement in einer gegebenen Stufe i des Netzwerks Rückkopplungsinformationen von Schaltelementen der Stufen (i+1) bis n erhalten kann. Die Rückkopplungsinformationen dienen zur Charakterisierung von übertragenen Datenpakete, und ein Schaltelement der Stufe i wählt basierend auf der Charakterisierung der Datenpakete diejenigen Datenpakete aus, welche an die nachfolgenden Stufen weitergeleitet werden können, so dass ein Datenstau in dem MIN frühzeitig erkannt werden kann, und Datenpakete, welche den Datenstau verstärken würden, beschränkt werden können.

Somit liegt der Erfindung das Problem zugrunde, für eine Prozessor-Anordnung eine einfache und kostengünstige Vorgehensweise anzugeben, mit der die Kollision von elektronischen Nachrichten in der Prozessor-Anordnung vermieden wird.

Das Problem wird durch die Prozessor-Anordnung, die Textilgewebestruktur, die Flächenverkleidungsstruktur und das Verfahren zum Übertragen von elektronischen Nachrichten zwischen Prozessoren einer Prozessor-Anordnung mit den Merkmalen gemäß den unabhängigen Patentansprüchen gelöst.

Eine Prozessor-Anordnung weist zumindest einen Schnittstellenprozessor auf, der eine Nachrichtenschnittstelle der Prozessor-Anordnung bildet. Ferner ist eine Vielzahl von Prozessoren vorgesehen, die in einer Baumstruktur miteinander gekoppelt sind und elektronische Nachrichten untereinander austauschen können, wobei zumindest teilweise nur die einander örtlich direkt zueinander benachbart angeordneten Prozessoren miteinander zum Austausch elektronischer Nachrichten gekoppelt sind. Jeder Prozessor der Vielzahl von Prozessoren weist einen ihm zugeordneten Pufferspeicher auf, in dem jeweils eine vorgegebene Anzahl von elektronischen Nachrichten zwischengespeichert werden kann. Ferner ist für jeden Prozessor der Vielzahl von Prozessoren ein Sensor und/oder ein Aktor vorgesehen und diesem zugeordnet, d.h. mit dem jeweiligen Prozessor gekoppelt, wobei Sensordaten und/oder Aktordaten des Sensors bzw. Aktors in den elektronischen Nachrichten von bzw. zu dem Schnittstellenprozessor übertragen werden können. Jeder Prozessor der Vielzahl von Prozessoren ist derart eingerichtet, dass er von einem Nachbar-Prozessor eine Erlaubnis-Angabe verarbeitet, mit der angegeben wird, wie viele elektronische Nachrichten der jeweilige Prozessor an den Nachbarprozessor zu einem vorgegebenen Zeitpunkt oder während eines vorgegebenen Zeitraums senden darf. Jeder Prozessor sendet nur maximal so viele elektronische Nachrichten an den Nachbarprozessor zu dem jeweiligen vorgegebenen Zeitpunkt oder während des vorgegebenen Zeitraums, wie es ihm gemäß der Erlaubnis-Angabe vorgegeben ist.

Bei einem Verfahren zum Übertragen von elektronischen Nachrichten zwischen Prozessoren einer Prozessor-Anordnung, welche mindestens einen Schnittstellenprozessor aufweist, der eine Nachrichtenschnittstelle der Prozessor-Anordnung bereitstellt, sowie eine Vielzahl von Prozessoren, die in einer Baumstruktur miteinander gekoppelt sind, und die elektronische Nachrichten untereinander austauschen können, wobei zumindest teilweise nur die einander örtlich direkt benachbart angeordneten Prozessoren miteinander zum Austausch elektronischer Nachrichten gekoppelt sind, wobei jeder Prozessor der Vielzahl von Prozessoren einen ihm zugeordneten Pufferspeicher aufweist, in dem eine vorgegebene Anzahl von elektronischen Nachrichten zwischengespeichert werden können, und wobei jedem Prozessor der Vielzahl von Prozessoren ein Sensor und/oder ein Aktor zugeordnet und mit dem jeweiligen Prozessor gekoppelt ist, wobei Sensordaten und/oder Aktordaten in den elektronischen Nachrichten von bzw. zu dem Schnittstellenprozessor übertragen werden, verarbeitet jeder Prozessor der Vielzahl von Prozessoren von einem Nachbarprozessor eine Erlaubnis-Angabe, mit der angegeben wird, wie viele elektronische Nachrichten der Prozessor an den Nachbarprozessor zu einem vorgegebenen Zeitpunkt oder während eines vorgegebenen Zeitraums senden darf. Der Prozessor sendet nur maximal so viele elektronische Nachrichten an einen Nachbarprozessor zu dem vorgegebenen Zeitpunkt oder während des vorgegebenen Zeitraums, wie ihm dieser in der Erlaubnis-Angabe vorgibt.

Unter einer Baumstruktur, in welcher die Vielzahl von Prozessoren miteinander gekoppelt sind, ist erfindungsgemäß jede Art von Kopplung der Prozessoren zu verstehen, bei der die Vielzahl von Prozessoren einen Nachrichtenfluss hin zu dem Schnittstellenprozessor bilden, wobei der Nachrichtenfluss analog zu einem Trichter zusammengeführt wird, d.h. es findet eine Zusammenführung der elektronischen Nachrichten im Nachrichtenfluss von den Prozessoren zu dem Schnittstellenprozessor hin statt. In diesem Zusammenhang ist die Baumstruktur nicht zwingend örtlich lokal zu verstehen, d.h. es können bei einer Baumstruktur, welche eine Vielzahl von Hierarchieebenen aufweist, ein Nachrichtenfluss auch stattfinden zwischen Prozessoren einer Hierarchieebene der Baumstruktur. Es ist lediglich vorgesehen, dass irgendwann der Nachrichtenfluss hin zu dem Schnittstellenprozessor auf eine andere Hierarchieebene der Baumstruktur, welche hinsichtlich des Nachrichtenflusses näher an dem Schnittstellenprozessor angeordnet ist, übergeht, so dass eine Bündelung der Nachrichten aufgrund des Übergangs zwischen unterschiedlichen Hierarchieebenen der Baumstruktur stattfindet.

Anschaulich kann die Erfindung darin gesehen werden, dass ein spezielles Protokoll vorgesehen wird, gemäß dem elektronische Erlaubnis-Nachrichten (im Folgenden auch bezeichnet als Permit-Nachrichten) ausgetauscht werden in Verbindung mit kleinen Pufferspeichern, welche in den jeweiligen relativ rechenleistungsschwachen Prozessoren in den Netzwerkknoten (d.h. den Prozessorelementen) vorgesehen sind.

Elektronische Nachrichten dürfen nur dann in Richtung des Schnittstellenprozessors, d.h. in Richtung Downlink der Prozessor-Anordnung versendet werden, wenn eine entsprechende Genehmigung in Form einer Permit-Nachricht des in Nachrichtenflussrichtung hin zu dem Schnittstellenprozessor gesehenen nächsten Knotens, d.h. nächsten Prozessors der Nachrichtenkette, vorliegt. Die entsprechenden Erlaubnis-Angaben (im Folgenden auch bezeichnet als Permits) werden gemäß einem sehr einfachen erfindungsgemäßen Algorithmus in den jeweiligen Prozessoren errechnet mittels Prognose der zukünftigen Belegung des jeweiligen Pufferspeichers des Prozessors in der Prozessor-Anordnung.

Die Prozessor-Anordnung kann in unterschiedlichen technischen Anwendungen eingesetzt werden, beispielsweise in den in [1] beschriebenen technischen Anwendungen.

Insbesondere eignet sich die Prozessor-Anordnung zum Einsatz in einem Display-Netzwerk, wobei in diesem Fall die einzelnen Prozessoren als Pixel ausgestaltet sind oder als Sensornetzwerk (ebenfalls als Pixel ausgestaltet) oder einer Kombination aus einem Sensornetzwerk und einem Aktornetzwerk. Insbesondere eignet sich die Erfindung zum Einsatz in einem selbstorganisierenden Netzwerk aus Prozessoren, welche in sensorische Fliesen mit Anzeigeelementen integriert sind. Ein anderes vorteilhaftes Einsatzgebiet ist in der vernetzten Elektronik in Industrietextilien zu sehen, beispielsweise bei einem "intelligenten" Teppich, wobei Prozessoren in Knotenpunkte des Textilmaterials eines Teppichs eingebracht sind und mittels in das Textilmaterial ebenfalls eingebrachter elektrisch leitfähiger Leitungen miteinander elektrisch gekoppelt sind, oder auch für betonverstärkende Elemente, beispielsweise bei Spannungssensoren im Rahmen von Textilbeton.

Die einzelnen Prozessoren der Prozessor-Anordnung sind mittels einer, vorzugsweise bidirektionalen, Kommunikationsverbindung miteinander gekoppelt.

Die Kommunikationsverbindung kann sowohl mittels einer elektrisch leitfähigen Verbindung, wie beispielsweise einer elektrischen Leitung, oder auch mittels einer Funkverbindung realisiert sein.

Zumindest ein Teil der Aktoren kann als ein bildgebendes Element ausgebildet sein, die Sensoren können als beliebige Sensoren, beispielsweise als Temperatursensor, als Drucksensor oder als Spannungssensor ausgebildet sein.

Durch die Erfindung wird es auf sehr einfache Weise ermöglicht, dass bei Einsatz selbst von leistungsschwachen Prozessoren in einer Prozessor-Anordnung und bei Verwendung lediglich kleiner Pufferspeicher für die jeweiligen Prozessoren eine Datenkollision im Nachrichtenfluss ausgehend von einem Prozessor zu dem Schnittstellenprozessor vermieden werden kann.

Bevorzugte Weiterbildungen der Erfindung ergeben sich aus den abhängigen Ansprüchen.

Die Ausgestaltungen der Erfindung betreffen sowohl die Prozessor-Anordnung, die Textilgewebestruktur, die Flächenverkleidungsstruktur als auch das Verfahren zum Übertragen elektronischer Nachrichten zwischen Prozessoren einer Prozessor-Anordnung.

Gemäß einer Ausgestaltung der Erfindung ist es vorgesehen, dass die Prozessoren der Prozessor-Anordnung synchron getaktet werden hinsichtlich der Verarbeitung und Weiterleitung einer oder mehrerer elektronischer Nachrichten. Anders ausgedrückt bedeutet dies, dass ein globaler Takt von einem Taktgeber an die Prozessoren der Prozessor-Anordnung bereitgestellt und diesen zugeführt wird, so dass eine synchrone Datenverarbeitung, insbesondere eine synchrone Übertragung von elektronischen Nachrichten von einem Prozessor zu einem jeweiligen Nachbarprozessor jeweils zu einem Takt erfolgt. Auf diese Weise ist eine sehr geordnete und berechenbare Verarbeitung der elektronischen Nachrichten erreicht.

Jeder Prozessor der Prozessor-Anordnung ist gemäß einer Ausgestaltung der Erfindung derart eingerichtet, dass in jedem Zeitintervall zwischen einem ersten Zeittakt und einem zweiten Zeittakt folgende Schritte durchführbar sind:

- es wird eine Erlaubnis-Angabe des ersten Zeittaktes des jeweiligen Prozessors eingelesen, anders ausgedrückt es wird eine elektronische Erlaubnis-Nachricht, empfangen von einem Nachbarprozessor, welcher in Nachrichtenflussrichtung zu dem Schnittstellenprozessor angeordnet ist, eingelesen;
- es wird die Belegung des Pufferspeichers des jeweiligen Prozessors für zumindest den zweiten Zeittakt, vorzugsweise für noch weiter in der Zukunft liegende Zeittakte berechnet, d.h. prognostiziert;
- es wird eine neue Erlaubnis-Angabe und damit verbunden eine neue Erlaubnis-Nachricht gebildet, abhängig von der berechneten Belegung des Pufferspeichers des jeweiligen Prozessors und als neue elektronische Nachricht entgegen der Nachrichtenflussrichtung weg von dem Schnittstellenprozessor zu einem Nachbarprozessor zu dem Zeitpunkt des zweiten Zeittakts übertragen.

Besonders bevorzugt ist jedes Prozessorelement aus der Mehrzahl von Prozessorelementen mit allen benachbarten Prozessorelementen mittels elektrisch leitfähiger Fäden und leitfähiger Datenübertragungs-Fäden gekoppelt, d.h. bei einem regelmäßigen rechteckigen Raster mit jeweils vier benachbarten Prozessorelementen.

Vorzugsweise ist mindestens ein Sensor mit der Mehrzahl von Prozessoreinheiten gekoppelt. Solch ein Sensor kann ein Drucksensor, ein Wärmesensor, ein Rauchsensor, ein optischer Sensor oder ein Geräuschsensor sein.

In einer Weiterbildung weist die Textilgewebestruktur mindestens ein bildgebendes Element und/oder, ein Schallwellen-Erzeugungselement und/oder ein Vibrations-Erzeugungselement auf, welches mit mindestens einem Teil der Mehrzahl von Mikroelektronikkomponenten gekoppelt ist.

Das heißt, dass die Textilgewebestruktur mindestens einen darin integrierten Aktor aufweist. Der Aktor ist beispielsweise eine bildgebende Einheit oder eine schallerzeugende Einheit, vorzugsweise eine FlüssigkeitsKristall-Anzeigeeinheit oder eine Polymerelektronik-Anzeigeeinheit, allgemein jede Art von Anzeigeeinheit, oder ein Lautsprecher, der eine Schallwelle erzeugt, allgemein jedes eine elektromagnetische Welle erzeugendes Element. Ein weiterer möglicher vorgesehener Aktor ist ein vibrationserzeugendes Element.

Gemäß einer anderen Ausgestaltung ist bei der Textilgewebestruktur oder der Prozessor-Anordnung die Mehrzahl von Prozessoren und/oder Sensoren und/oder Aktoren derart eingerichtet, dass zum Ermitteln eines jeweiligen Abstands eines ersten Prozessorelements von einer Referenzposition elektronische Nachrichten ausgetauscht werden zwischen dem ersten Prozessorelement und einem zweiten, benachbarten Prozessorelements der Textilgewebestruktur bzw. der Prozessor-Anordnung. Jede Nachricht enthält eine Abstandsinformation, welche den Abstand eines die Nachricht sendenden Prozessorelements oder eines die Nachricht empfangenden Prozessorelements von der Referenzposition angibt. Ferner ist die Mehrzahl von Prozessorelementen derart eingerichtet, dass aus der Abstandsinformation einer empfangenen Nachricht der eigene Abstand zu der Referenzposition ermittelbar ist oder speicherbar ist. Das erfindungsgemäß eingesetzte Verfahren zur Selbstorganisation ist im Detail in [1] beschrieben.

Vorzugsweise ist die Flächenverkleidungsstruktur als Wand-Verkleidungsstruktur oder Fußboden-Verkleidungstruktur oder Decken-Verkleidungtruktur ausgebildet.

Die Flächenverkleidungsstruktur kann zumindest über Teilbereichen der Textilgewebestruktur ein gleichförmig mit elektrisch leitfähigen Drähten durchzogenes Textil aufweisen.

Das mit elektrisch leitfähigen Drähten durchzogene Textil kann zur Vermeidung von "Elektrosmog" in der Umgebung von Menschen verwendet werden. Hierdurch kann der "Elektrosmog" abgeschirmt werden. Dabei ist jedoch zu beachten, dass gegebenenfalls bestimmte Bereiche, z.B. Bereiche über kapazitiven Sensoren, nicht von der Abschirmung überdeckt werden dürfen.

Die Erfindung eignet sich insbesondere zum Einsatz in folgenden Anwendungsbereichen:

- Hausautomatisierung, insbesondere zur Erhöhung des häuslichen Komforts,
- Alarmanlagen mit Positionsbestimmung und optionaler Gewichtsbestimmung eines Eindringlings,
- eine automatische Besucherführung auf Messen bei einer Ausstellung oder in einem Museum,
- für ein Leitsystem in einer Notfallsituation, beispielsweise in einem Flugzeug oder in einem Zug, um den Passagieren einen Weg zu einem Notausgang anzuzeigen,
- in Textilbetonkonstruktionen, in welchen Textilgewebestrukturen dazu dienen können, mögliche Schäden zu detektieren,
- Informationsgewinnung zur Führung einer Statistik, in welchen Bereichen in einem Geschäft sich Kunden wie lange aufhalten.

Eine erfindungsgemäße Textilgewebestruktur enthält neben einen vorzugsweise aus Kunstfaser (elektrisch nicht-leitfähigen Fäden) bestehenden Grundgewebe, leitfähige Fäden, vorzugsweise leitfähige Kett- und Schussfäden, die vorzugsweise aus Metalldrähten, z.B. Kupfer, Polymerfilamenten, Carbonfilamenten oder anderen elektrisch leitfähigen Drähten bestehen. Werden Metalldrähte verwendet, wird vorzugsweise eine Beschichtung aus edleren Metallen, z.B. Gold oder Silber als Korrosionsschutz bei Feuchtigkeit oder aggressive Medien verwendet. Eine andere Möglichkeit besteht darin Metallfäden durch das Aufbringen eines Isolierlackes, z.B. Polyester, Polyamidimid, oder Polyurethan zu isolieren.

Als Datenübertragungs-Fäden können neben elektrisch leitfähigen Fasern auch Lichtwellenleiter aus Kunststoff oder Glas verwendet werden.

Das Grundgewebe der Textilgewebestruktur wird vorzugsweise in einer Dicke hergestellt, welche einer Dicke der zu integrierenden Mikroelektronikkomponenten, im Folgenden auch Mikroprozessormodule genannt, z.B. Sensoren, Leuchtdioden und/oder Mikroprozessoren angepasst ist. Ein Sensor kann z.B. ein Drucksensor, ein Wärmesensor, ein Rauchsensor, ein optischer Sensor oder ein Geräuschsensor sein. Vorzugsweise wird ein Abstand der optisch und/oder elektrisch leitfähigen Fasern so gewählt, dass es zu einem Anschlussraster des zu integrierenden Prozessorelements passt.

Auch wenn in den folgenden Ausführungsbeispielen Teppich-Prozessor-Anordnungen beschrieben sind, so ist die Erfindung nicht auf einen Teppich beschränkt, sondern ist auf jedes zur Flächenbedeckung bzw. Flächenverkleidung geeignete Element anwendbar, allgemein auf jede Prozessor-Anordnung, bei denen einem Prozessor ein Sensor und/oder ein Aktor zugeordnet ist.

Die erfindungsgemäße Textilgewebestruktur mit integrierter Mikroelektronik, Prozessoreinheiten und/oder Sensoren und/oder Aktoren, z.B. Anzeigelämpchen, ist für sich voll funktionsfähig und kann unter verschiedenartige Flächenverkleidungen fixiert werden. Hierbei sind zum Beispiel nicht leitende Textilien, Bodenbeläge aus Teppichboden, Parkett, Kunststoff, Gardinen, Rollos, Tapeten, Isoliermatten, Zeltdächer, Verputzschichten, Estrich und Textilbeton zu nennen. Vorzugsweise wird das Fixieren mittels Klebens, Laminierens, oder Vulkanisierens durchgeführt.

Ausführungsbeispiele der Erfindung sind in den Figuren dargestellt und werden im Folgenden näher erläutert.

Gleiche Elemente sind in den Figuren mit gleichen Bezugszeichen versehen.

Es zeigen

Figur 1    eine Prozessor-Anordnung gemäß dem Stand der Technik;

Figur 2    eine andere Prozessor-Anordnung gemäß dem Stand der Technik;

Figur 3    eine Prozessor-Anordnung in einer Textilgewebestruktur gemäß einem Ausführungsbeispiel der Erfindung;

Figur 4    eine Skizze eines Prozessorelements der Prozessor-Anordnung mit einem Prozessor und einem dem Prozessor zugeordneten Sensor;

Figur 5    eine Prozessor-Anordnung gemäß einem zweiten Ausführungsbeispiel der Erfindung zu einem ersten Zeitpunkt des erfindungsgemäßen Verfahrens zum Übertragen elektronischer Nachrichten;

Figur 6    eine Prozessor-Anordnung gemäß dem zweiten Ausführungsbeispiel der Erfindung zu einem zweiten Zeitpunkt des erfindungsgemäßen Verfahrens zum Übertragen elektronischer Nachrichten;

Figur 7    eine Prozessor-Anordnung gemäß dem zweiten Ausführungsbeispiel der Erfindung zu einem dritten Zeitpunkt des erfindungsgemäßen Verfahrens zum Übertragen elektronischer Nachrichten.

Figur 8    die Prozessor-Anordnung gemäß dem zweiten Ausführungsbeispiel der Erfindung zu einem vierten Zeitpunkt des erfindungsgemäßen Verfahrens zum Übertragen elektronischer Nachrichten.

Figur 9    die Prozessor-Anordnung gemäß dem zweiten Ausführungsbeispiel der Erfindung zu einem fünften Zeitpunkt des erfindungsgemäßen Verfahrens zum Übertragen elektronischer Nachrichten;

Figur 10    die Prozessor-Anordnung gemäß dem zweiten Ausführungsbeispiel der Erfindung zu einem sechsten Zeitpunkt des erfindungsgemäßen Verfahrens zum Übertragen elektronischer Nachrichten;

Figur 11    die Prozessor-Anordnung gemäß dem zweiten Ausführungsbeispiel der Erfindung zu einem siebten Zeitpunkt des erfindungsgemäßen Verfahrens zum Übertragen elektronischer Nachrichten;

Figur 12    die Prozessor-Anordnung gemäß dem zweiten Ausführungsbeispiel der Erfindung zu einem achten Zeitpunkt des erfindungsgemäßen Verfahrens zum Übertragen elektronischer Nachrichten;

Figur 13    die Prozessor-Anordnung gemäß dem zweiten Ausführungsbeispiel der Erfindung zu einem neunten Zeitpunkt des erfindungsgemäßen Verfahrens zum Übertragen elektronischer Nachrichten;

Figur 14    die Prozessor-Anordnung gemäß dem zweiten Ausführungsbeispiel der Erfindung zu einem zehnten Zeitpunkt des erfindungsgemäßen Verfahrens zum Übertragen elektronischer Nachrichten;

Figur 15    die Prozessor-Anordnung gemäß dem zweiten Ausführungsbeispiel der Erfindung zu einem elften Zeitpunkt des erfindungsgemäßen Verfahrens zum Übertragen elektronischer Nachrichten;

Figur 16    die Prozessor-Anordnung gemäß dem zweiten Ausführungsbeispiel der Erfindung zu einem zwölften Zeitpunkt des erfindungsgemäßen Verfahrens zum Übertragen elektronischer Nachrichten;

Figur 17    eine erfindungsgemäße Textilgewebestruktur, auf welche in Teilbereichen ein dunkler Teppich fixiert ist; und

Figur 18    eine Draufsicht auf die Prozessor-Anordnung der Textilgewebestruktur aus Figur 17 gemäß dem ersten Ausführungsbeispiel der Erfindung.

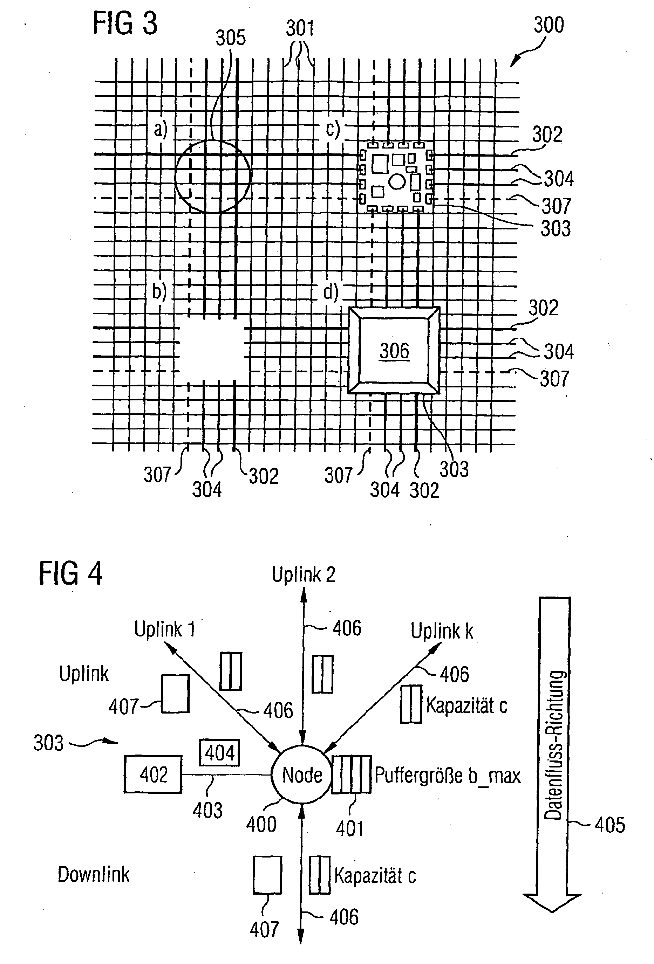

In **Fig.3** ist eine schematische Darstellung einer Prozessor-Anordnung, eingebettet in einer Textilgewebestruktur 300 gemäß einem Ausführungsbeispiel der Erfindung gezeigt.

Die erfindungsgemäße Textilgewebestruktur 300 weist als Grundstruktur ein grobmaschiges Gewebe auf, welches aus nicht leitfähigen Fäden 301 ausgebildet ist. Ferner weist die Textilgewebestruktur 300 erste elektrisch leitfähige Fäden 302 und zweite elektrisch leitfähige Fäden 307 auf. Die ersten elektrisch leitfähigen Fäden 302 dienen als Erdung für in die Textilgewebestruktur 300 zu integrierenden Mikroelektronikkomponenten 303. Die zweiten elektrisch leitfähigen Fäden 307 werden für die Stromversorgung der in die Textilgewebestruktur 300 zu integrierenden Prozessorelemente 303 verwendet.

Ferner weist die Textilgewebestruktur 300 jeweils zwei leitfähige Datenübertragungs-Fäden 304 auf, welche zur Datenübertragung von und zu den integrierten Prozessorelementen 303 verwendet werden.

Die elektrisch leitfähigen Fäden 302, 307 und die leitfähigen Datenübertragungs-Fäden 304 sind vorzugsweise im Gewebe in einem quadratischen Raster angelegt, so dass ein quadratisches Raster von Kreuzungspunkten 305 in der Textilgewebestruktur 300 gebildet wird.

Ein Bereich eines solchen Kreuzungspunktes ist in Fig.3 mit a) markiert.

Ferner sind in einem Bereich, welcher in Fig.3 mit b) markiert ist, eines Kreuzungspunktes 305 die elektrisch leitfähigen Fäden 302, 307 und die leitfähigen Datenübertragungs-Fäden 304 entfernt, wodurch eine Lücke in der Textilgewebestruktur 300 gebildet wird.

Im Bereich c) der Fig.3 ist in einer Lücke in der Textilgewebestruktur 300 ein Prozessorelement 303 angeordnet, wobei die elektrisch leitfähigen Fäden 302, 307 und die leitfähigen Datenübertragungs-Fäden 304 an das Prozessorelement 303 gekoppelt werden, um das Prozessorelement 303 mit elektrischer Energie zu versorgen und eine Datenübertragungsleitung für das Prozessorelement 303 bereitzustellen.

Vorzugsweise wird in der erfindungsgemäßen Textilgewebestruktur 300 jedes Prozessorelement 303 an einem jeweiligen Kreuzungspunkt 305 der elektrisch leitfähigen Fäden 302 und 307 und der leitfähigen Datenübertragungs-Fäden 304 angeordnet und nachfolgend an die elektrisch leitfähigen Fäden 302 und 307 und die leitfähigen Datenübertragungs-Fäden 304 gekoppelt, welche von vier Seiten an das Prozessorelement 303 heranführen.

Die Kopplung zwischen dem Prozessorelement 303 und den elektrisch leitfähigen Fäden 302 und 307 und den leitfähigen Datenübertragungs-Fäden 304 kann mittels Kontaktierung durch eine flexible Leiterplatte oder mittels sogenannten Drahtbondens realisiert sein.

Im Bereich d) der Fig.3 ist schematisch ein Prozessorelement 303 gezeigt, welches verkapselt ist, um den Kopplungsbereich (Kontaktstellen) zwischen Prozessorelement 303 und den elektrisch leitfähigen Fäden 302, 307 und den leitfähigen Datenübertragungs-Fäden 304 zu isolieren und ferner einen mechanisch robusten und wasserfesten Schutz 306 bereitzustellen.

Eine erfindungsgemäße Textilgewebestruktur 300 weist an einer Mehrzahl von Kreuzungspunkten 305 jeweils ein Prozessorelement 303 auf. Eine solche "intelligente" Textilgewebestruktur 300 kann als Basisschicht oder als Zwischenlage einer Wand- oder Bodenverkleidung oder andere Arten von technischen Textilien bilden.

Sie kann z.B. auch als Schicht einer Textilbetonkonstruktion verwendet werden. Die Prozessorelemente 303 der Textilgewebestruktur 300 können mit einer Vielzahl von verschiedenartigen Sensoren und/oder Aktoren gekoppelt sein. Zum Beispiel können dies LEDs (Leuchtdioden), Anzeigeelemente oder Displays sein, um Informationen, welche zu den Prozessorelementen 303 übertragen werden anzuzeigen bzw. um erfasste Sensordaten von den Prozessorelementen 303 zu einem Auswertesystem hin über den Schnittstellenprozessor zu übertragen.

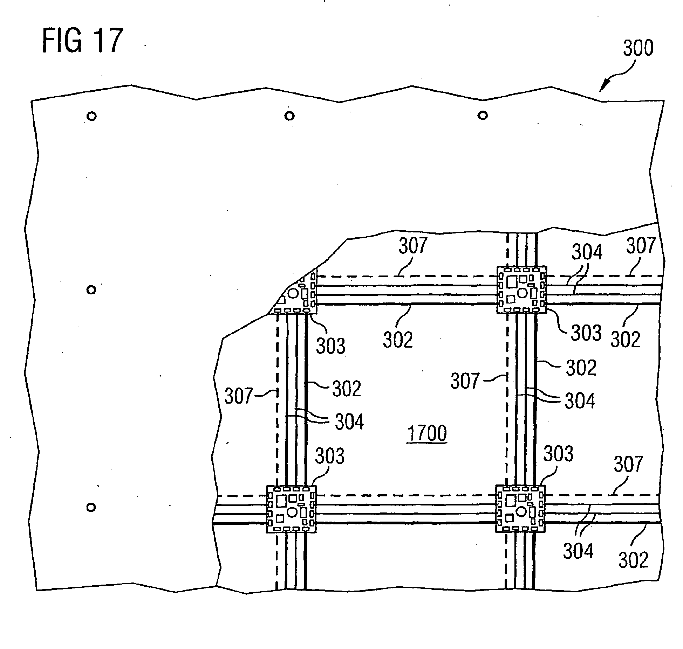

**Fig.17** zeigt ein Ausführungsbeispiel eines so genannten intelligenten Teppichs mit einer erfindungsgemäßen Prozessor-Anordnung.

Im unteren rechten Teil der Fig.17 ist ein grobmaschiges Grundgewebe 1700 dargestellt, in welches leitfähige Fäden 302, 304 und 307 in einem quadratischen Raster eingewoben sind. An Kreuzungspunkten 305 der leitfähigen Fäden 302, 304 und 307 sind Prozessorelemente 303 in dem grobmaschigen Grundgewebe 1700 angeordnet. Somit entsteht ein regelmäßiges Raster aus Prozessorelementen 303, welche jeweils auf vier Seiten mit Versorgung- und Datenleitungen kontaktiert sind. Wobei die Prozessorelemente 303 zusätzlich mit einer Verkapselung und mit einer Leuchtdiode und/oder mit einem Drucksensor versehen sind. Ferner ist im linken und hinteren Teil der Fig.17 ein Teppichboden auf der Textilgewebestruktur 300 fixiert.

Die erfindungsgemäße Textilgewebestruktur 300 mit integrierter Mikroelektronik, insbesondere mit integrierten Prozessorelementen 303 mit Sensoren und/oder Aktoren, z.B. Anzeigelämpchen, ist für sich voll funktionsfähig und kann unter verschiedenartige Flächenverkleidungen fixiert werden. Hierbei sind zum Beispiel nicht leitende Textilien, Bodenbeläge aus Teppichboden, Parkett, Kunststoff, Gardinen, Tapeten, Isoliermatten, Zeltdächer, Verputzschichten, Estrich und Textilbeton zu nennen.

Vorzugsweise wird das Fixieren mittels Klebens, Laminierens, oder Vulkanisierens durchgeführt. Zur Vermeidung von "Elektrosmog" in der Umgebung von Menschen, kann über die erfindungsgemäße Textilgewebestruktur zur Abschirmung auch ein gleichförmig mit elektrisch leitfähigen Drähten durchzogenes Textil aufgebracht werden. Dabei ist jedoch zu beachten, dass gegebenenfalls bestimmte Bereiche, z.B. Bereiche über kapazitiven Sensoren, nicht von der Abschirmung überdeckt werden dürfen.

Die erfindungsgemäße Textilgewebestruktur mit integrierter Mikroelektronik wird vorzugsweise an einer Stelle am Rand der Textilgewebestruktur mit einer zentralen Steuereinheit, z.B. einem einfachen Personal Computer, gekoppelt.

Mit einfachen Algorithmen beginnen die Prozessorelemente, sich gemäß den in [1] beschriebenen Verfahren selbst zu organisieren. Wird eine Textilgewebestruktur, welche ein Netzwerk aus Prozessorelementen aufweist, angeschlossen, d.h. in Betrieb genommen, so beginnt eine Lernphase, nach der jedes Prozessorelement seine exakte physikalische Position im Raster kennt..

Ferner werden automatisch Wege für Datenströme durch das Raster hindurch konfiguriert, wodurch Sensor- oder Displayinformationen um defekte Bereiche der Textilgewebestruktur geleitet werden können. Durch die Selbstorganisation des Netzwerkes, werden defekte Bereiche erkannt und umgangen. Dadurch ist das Netzwerk aus Mikroelektronikmodulen auch noch funktionsfähig, falls die Textilgewebestruktur 300 in eine Form geschnitten ist, welche durch den jeweiligen Verwendungszweck vorgegeben ist. Darüber hinaus bewirkt die Selbstorganisation, dass kein manueller Installationsaufwand für das Netzwerk von Mikroelektronikmodulen notwendig ist.

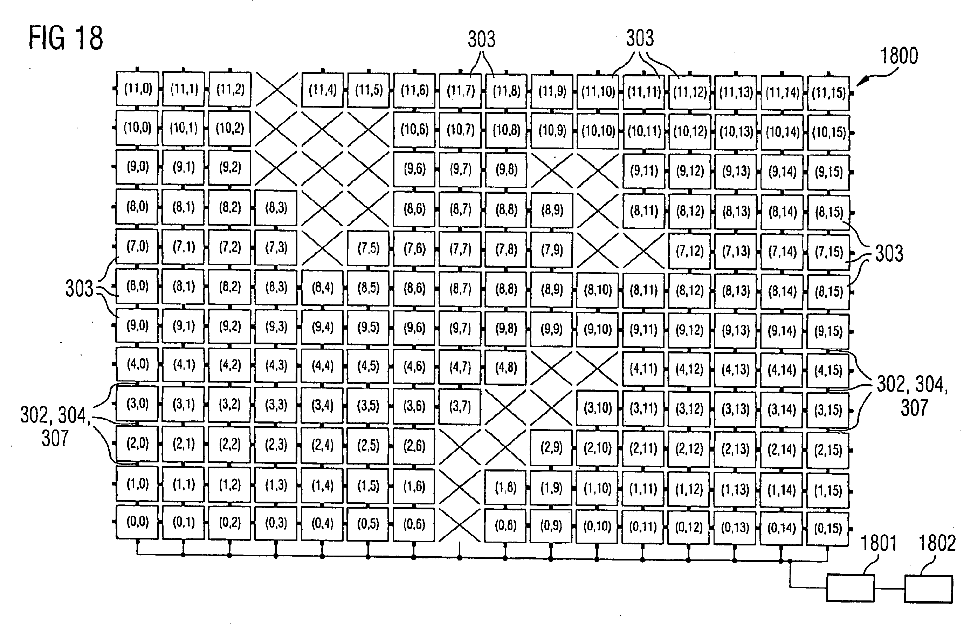

**Fig.18** zeigt eine schematische Draufsicht auf eine Prozessor-Anordnung 1800 der Textilgewebestruktur 300 aus Fig.3 und Fig.17 mit einer Vielzahl von Prozessorelementen 303, welche in ein Textilelement, wie oben beschrieben, eingebettet sind.

Die Prozessorelemente 303 sind an jeweils einem Kreuzungspunkt 305 von zwei im Wesentlichen im rechten Winkel zueinander angeordneten Textilfäden eingebracht, wie oben im Zusammenhang mit Fig.3 beschrieben.

Gemäß einer ersten alternativen Ausführungsform ist vorgesehen, dass die Textilfäden selbst elektrisch leitfähig sind. Sind sie es nicht, so ist es in einer anderen Ausgestaltung der Erfindung vorgesehen, wie oben beschrieben, dass in den Textilfäden elektrisch leitfähige Leitungen 302, 304, 307 vorhanden sind zum Übertragen elektrischer Signale.

Mittels der elektrisch leitfähigen Textilfasern oder mittels der elektrischen Leitungen 302, 304, 307 sind die einander unmittelbar benachbarten Prozessorelemente 303 in dem Textilgewebe 300 miteinander zum Austausch elektronischer Nachrichten gekoppelt.

Ferner ist ein als Schnittstellenprozessor 1801 vorgesehener Portal-Prozessor bereitgestellt, welcher mit mindestens einem der Prozessorelemente 303 in dem Textilelement 300 verbunden ist zum Einspeisen bzw. Auslesen von Nachrichten in bzw. aus der Prozessor-Anordnung 1800. Ferner ist ein mit dem Schnittstellenprozessor 1801 gekoppeltes Auswertesystem 1802 vorgesehen, eingerichtet als Personal Computer, mit dem eine Auswertung der von den Sensoren 401 der Prozessorelemente 303 erfassten und aus der Prozessor-Anordnung 1800 über den Schnittstellenprozessor 1801 zu dem Auswertesystem 1802 übertragenen Sensordaten durchgeführt wird, beispielsweise eine statistische Überwachung der Daten, eine Schwellenwertüberprüfung, etc.

Die Prozessoren der Prozessorelemente 303 ermitteln in einem Verfahren, wie es in [1] beschrieben ist, im Rahmen einer Selbstorganisation ihre Position relativ zu dem oder den Schnittenstellenprozessoren 1802.

Die Prozessoren der Prozessor-Anordnung 1800 sind bezüglich des Schnittstellenprozessors 1801 in einer Baumstruktur mit unterschiedlichen Hierarchieebenen angeordnet. Unter Hierarchieebene ist in diesem Zusammenhang ein Abstand bezüglich des Nachrichtenflusses, definiert in einer Anzahl von zwischen dem betrachteten Prozessor und dem Portalprozessor liegenden anderen Prozessoren, zu verstehen.

Die Prozessoren der Prozessor-Anordnung 1800 sind mittels eines globalen synchronen Taktgebers (nicht gezeigt) synchron getaktet.

Gemäß den folgenden Ausführungsbeispielen wird ein Protokoll dargestellt, mit dessen Hilfe die im Folgenden noch näher erläuterten elektronischen Nachrichten so lange in der Prozessor-Anordnung 1800 gepuffert werden, wie es notwendig ist.

Eine grundlegende Idee der Erfindung ist, dass jeder Prozessor zwar nur einen kleinen, ihm zugeordneten Pufferspeicher aufweist, aber dass durch die Größe des Netzwerkes, d.h. das durch die Anzahl der in der Prozessor-Anordnung 1800 enthaltenen Prozessoren, entstehende Datenproblem hinsichtlich einer Datenkollision auch durch die Größe des gesamten Pufferspeichers des Netzwerkes, gebildet durch die Summe der einzeln, den Prozessoren zugeordneten Pufferspeichern, gelöst wird.

**Fig.4** zeigt ein Prozessorelement 303 mit einem Prozessor 400 gemäß einem Ausführungsbeispiel der Erfindung, wobei nach erfolgter Selbstorganisation innerhalb des Prozessors 400 den einzelnen vier Kommunikationsverbindungen, mittels welchen der Prozessor 400 mit benachbarten Prozessoren verbunden ist, schon eine Richtung bezüglich des Nachrichtenflusses zu bzw. weg von dem Schnittstellenprozessor 1801 zugeordnet ist.

Für jeden Prozessor 400 ist jeweils ein Pufferspeicher 401 vorgesehen der Puffergröße $b_{max}$.

Ferner ist gemäß dem vorliegenden Ausführungsbeispiel ein Drucksensor 402 bei zumindest einem Teil der Prozessoren 400 bzw. der Prozessorelemente 303 vorgesehen, welcher mittels einer elektrische Leitung 403 mit dem Prozessor 400 verbunden ist und darüber dem Prozessor 400 Sensordaten 404 übermittelt.

Die Sensordaten 404 enthalten beispielsweise einen von dem Drucksensor 402 ermittelten Druckwert oder eine über eine vorgegebene Zeitdauer ermittelte Mehrzahl von Druckwerten.

Durch die gemäß dem in [1] beschriebenen Verfahren durchgeführte Selbstorganisation ist nach erfolgter Durchführung eine Orientierung ermittelt und dem Prozessor 400 zugeordnet, wobei mit einer Orientierung insbesondere auch die Datenflussrichtung im Rahmen der Übertragung von Daten ermittelt wurden. Bei dem Prozessor 400 ist durch einen Pfeil 405 die Nachrichtenflussrichtung hin zu dem Schnittstellenprozessor 1801 der Prozessor-Anordnung 1800 beschrieben.

Die Datenflussrichtung hin zu dem Schnittstellenprozessor 1801 wird im Folgenden auch als Downlink bezeichnet, die Nachrichtenflussrichtung weg von dem Schnittstellenprozessor 1801 wird im Folgenden auch als Uplink bezeichnet.

Jede Kommunikationsverbindung 406 weist eine vorgegebene maximale Kapazität auf, d.h. eine maximal vorgegebene Anzahl zu einem Zeittakt oder in einem Zeitintervall maximal über eine Kommunikationsverbindung 406 übertragbare Anzahl von elektronischen Nachrichten.

Der Prozessor 400 besitzt somit erfindungsgemäß genau eine bidirektionale Kommunikationsverbindung 406 in Richtung der Baumwurzel, d.h. in Richtung des Schnittstellenprozessors 1801 (in Downlink-Richtung) und $k \in N_0$ bidirektionale Kommunikationsverbindungen 406 zu Prozessoren, die weiter weg von dem Wurzel-Knoten, d.h. dem Schnittstellenprozessor 1801 liegen (in Uplink-Richtung).

Bei einer orthogonalen Vermaschung, wie sie gemäß diesem Ausführungsbeispiel vorgesehen ist, ist $k \in \{0, 1, 2, 3\}$ und bei einer hexagonalen Vermaschung, wie sie gemäß einer alternativen Ausgestaltung der Erfindung vorgesehen ist, ist $k \in \{0, 1, 2, 3, 4, 5\}$.

Im Folgenden werden die Voraussetzungen angenommen, wie sie in [1] hinsichtlich der Ausgestaltung der Prozessoren 400 innerhalb der Prozessor-Anordnung 1800 beschrieben sind, insbesondere die folgende Taktung der Prozessoren 400 der Prozessor-Anordnung 1800.

Innerhalb eines Zeittaktes führt jeder Prozessor 400 folgende Aktionen durch:

- Lesen von einer oder mehreren elektronischen Nachrichten, die an einer oder mehreren Kommunikationsverbindungen 406 des Prozessors 400 anliegen und die im zeitlich vorangegangenen Zeittakt von einem Nachbarprozessor versendet wurden.

- Verarbeiten der empfangenen Nachrichten.

- Gegebenenfalls Versenden von einer elektronischen Nachricht oder mehreren elektronischen Nachrichten über eine Kommunikationsverbindung 406 oder über mehrere Kommunikationsverbindungen 406, die im zeitlich nächsten Zeittakt von einem Nachbarprozessor empfangen werden können.

Innerhalb eines Zeittaktes kann somit eine elektronische Nachricht 407 nur von einem Prozessor 400 zu einem diesem unmittelbar benachbarten Nachbarprozessor "wandern", d.h. übermittelt werden.

Gemäß einer alternativen Ausführungsform ist keine globale gemeinsame Taktung der Prozessoren 400 der Prozessor-Anordnung 1800 vorgesehen, was hinsichtlich der Realisierung jedoch keinen Unterschied macht.

Zur einfacheren Darstellung der Erfindung wird jedoch eine gemeinsame Taktung der Prozessoren 400 in der Prozessor-Anordnung 1800 angenommen.

Die Anzahl der elektronischen Nachrichten, die in einem Zeittakt von einem Prozessor zum nächsten gesendet werden kann, wird durch die Kapazität $c \in N$ der jeweiligen bidirektionalen Kommunikationsverbindung 406 beschrieben.

Zur Vereinfachung wird ohne Einschränkung der Allgemeingültigkeit im Folgenden die gleiche Kapazität c auf allen bidirektionalen Kommunikationsverbindungen 406 angenommen. Erweiterungen für unterschiedliche Kapazitäten der einzelnen Kommunikationsverbindungen 406 werden jedoch analog gehandhabt.

Ferner besitzt jeder Prozessor 400 einen Pufferspeicher zur Speicherung von bis zu $b_{max} \in N$ elektronischen Nachrichten, wie oben erläutert.

Unterschieden wird im Folgenden zwischen Punkt-zu-Punkt-Nachrichten, die ein Prozessor 400 zu einem Nachbarprozessor übermittelt und die der Nachbarprozessor verarbeitet, anders ausgedrückt, konsumiert, und Routing-Nachrichten, welche Sensordaten und/oder Aktordaten enthalten, und die nicht von dem Nachbarprozessor verarbeitet werden, sondern zu dem in Downlink-Richtung nächsten Nachbarprozessor weiter versendet werden.

Als eine Punkt-zu-Punkt-Nachricht wird erfindungsgemäß eine Erlaubnis-Nachricht (Permit-Nachricht) verwendet, die einen oder mehrere ganzzahlige Parameterwerte enthält.

Bei Empfang einer Erlaubnis-Nachricht $Permit(\pi_0, \pi_1, \pi_2, ...)$ aus der Downlink-Richtung in dem Prozessor 400 wird dem die Erlaubnis-Nachricht empfangenden Prozessor 400 gestattet, zum aktuellen Zeittakt $\pi_0 \in \{0, ..., c\}$ elektronische Nachrichten an den die Erlaubnis-Nachricht sendenden Nachbarprozessor zu schicken, zum zeitlich nächsten Zeittakt $\pi_1 \in \{0, ..., c\}$ elektronische Nachrichten, usw.

Im einfachsten Fall enthält die Erlaubnis-Nachricht nur einen Parameterwert, d.h. eine Erlaubnis-Angabe, mit der angegeben wird, wie viele elektronische Nachrichten der die Erlaubnis-Nachricht empfangende Prozessor zum aktuellen Zeittakt an den die Erlaubnis-Nachricht sendenden Nachbarprozessor übermitteln darf $(Permit(\pi_0))$.

Jeder Prozessor 400 berechnet die Belegung seines Pufferspeichers, d.h. seinen Pufferfüllstand für zukünftige Zeittakte und sendet anschließend entsprechende Erlaubnis-Nachrichten in Uplink-Richtung zu den jeweils in Uplink-Richtung diesem Prozessor 400 unmittelbar benachbarten Nachbarprozessoren. Eine einmal gesendete Erlaubnis-Angabe kann durch eine nachfolgende Erlaubnis-Nachricht überschrieben werden.

Die Belegung des Pufferspeichers 401 des Prozessors 400 zu Beginn eines Zeittaktes wird durch $b \in N_0$, $b \le b_{max}$ beschrieben, die erteilten Erlaubnis-Angaben des in Downlink-Richtung angeordneten Nachbarprozessors werden

als $p_0$, $p_1$, ... verwaltet und die Erlaubnis-Angaben für die Nachbarprozessoren in Uplink-Richtung werden als $p_0^i$, $p_1^i$, ... mit $1 \leq i \leq k$ bezeichnet. Weist der Prozessor in Uplink-Richtung keine Nachbarprozessoren mehr auf, d.h., anders ausgedrückt, ist $k = 0$, so entfällt diese Verwaltung.

Im Folgenden wird die oben beschriebene Vorgehensweise für einen Zeittakt im Detail beschrieben:

**1. Abfrage von elektronischen Nachrichten, welche von einem in Downlink-Richtung angeordneten Nachbarprozessor empfangen werden:**

Liegt eine neue Erlaubnis-Nachricht mit dem Parametern ($\pi_0$, $\pi_1$, $\pi_2$, ...) vor, so setze

$$p_j := \pi_j, \qquad j \in \mathbb{N}_0 . \qquad\qquad (1)$$

In diesem Zusammenhang ist hinsichtlich der Implementierung des Verfahrens auf einem Rechner anzumerken, dass für den Fall, dass beispielsweise als Parameter ($\pi_0,\pi_1$) vorliegt, $p_0 := \pi_0$ und $p_1 := \pi_1$ gesetzt werden und eventuell existierende Erlaubnis-Angaben $p_2$, $p_3$, ... auf den Wert Null gesetzt werden.

**2. Pufferspeicher-Leerung:**

Die Anzahl a der zu dem in Downlink-Richtung angeordneten Nachbarprozessor zu sendenden Puffernachrichten wird auf

$$a := \min(b, p_0) \qquad\qquad (2)$$

gesetzt.

Es werden a elektronische Nachrichten aus dem Pufferspeicher 401 des Prozessors 400 an den in Downlink-Richtung des Prozessors 400 angeordneten Nachbarprozessor gesendet und es wird

$$b := b - a \qquad\qquad (3)$$

gesetzt.

**3. Durchschleifen von elektronischen Nachrichten:**

Falls $a < p_0$ gilt, so wird

$$a := p_0 - a \qquad\qquad (4)$$

als die Anzahl der noch versendbaren elektronischen Nachrichten 407 gesetzt. Es werden bis zu a elektronische Nachrichten 407 von den in Uplink-Richtung angeordneten Nachbarprozessoren abgefragt und diese elektronischen Nachrichten 407 werden an den in Downlink-Richtung angeordneten Nachbarprozessor versendet.

**4. Füllen des Pufferspeichers (Puffer-Befüllung):**

Anschließend werden alle elektronischen Nachrichten 407, welche von in Uplink-Richtung benachbart angeordneten Nachbarprozessoren anliegen mit der Anzahl $a_1$, ..., $a_k$ abgefragt, wobei die gegebenenfalls durchgeschleiften elektronischen Nachrichten 407 bereits abgezogen sind.

Die abgefragten elektronischen Nachrichten 407 werden in dem Pufferspeicher 401 gespeichert, d.h. die neue Belegung des Pufferspeichers 401 ergibt sich gemäß folgender Vorschrift:

$$b := b + a_1 + a_2 + ... + a_k.\qquad\qquad (5)$$

**5. Aktualisieren der Erlaubnis-Angaben (Permit-Update in Downlink):**

Die Downlink-Erlaubnis-Angaben werden gemäß folgender Vorschrift verschoben:

$$p_j := p_{j+1}, \qquad\qquad j \in N_0 \qquad\qquad (6)$$

und die Erlaubnis-Angaben für die Uplink-Prozessoren werden gesetzt gemäß folgender Vorschrift:

$$p_0^i := p_1^i, \qquad\qquad 1 \leq i \leq k. \qquad\qquad (7)$$

Dies bedeutet, dass $p_0^i$ die maximale Zahl der im zeitlich nächsten Takt vom Uplink-Prozessor i erwarteten elektronischen Nachrichten ist.

Hinsichtlich einer einfachen Implementierung des erfindungsgemäßen Verfahrens ist anzumerken, dass für den Fall, dass beispielsweise nur $p_0$ und $p_1$ berücksichtigt bzw. verwendet werden, $p_0 := p_1$ und $p_1 := 0$ gesetzt werden.

Wird nur $p_0$ verwendet, so wird konstant $p_0 = 0$ verwendet.

**6. Prognose der Belegung der Pufferspeicher (Prognose der Pufferfüllstände):**

Die Belegung des Pufferspeichers 401 $b_1$ d.h. der Pufferfüllstand $b_1$ im zeitlich nächsten Takt berechnet sich gemäß folgender Vorschrift:

$$b_1 = \max\left(0, b - p_0 + p_0^1 + p_0^2 + ... + p_0^k\right). \qquad\qquad (8)$$

Dann ist

$$P_1 := b_{max} - b_1 + p_1 \qquad\qquad (9)$$

die maximale Anzahl an elektronischen Nachrichten, die im übernächsten Takt von den in Uplink-Richtung angeordneten Nachbarprozessoren geschickt werden darf.

Für j = 1, 2, ... werden folgende Verfahrensschritte durchgeführt:

-- Es werden $p_j^{\overline{1}}, \ldots, p_j^{\overline{i}}$ gemäß einer im Folgenden näher erläuterten Arbitrierungsstrategie so gewählt, dass

$$p_j^1 + \ldots + p_j^k \leq P_j \text{ und } 0 \leq p_j^i \leq c, \ 1 \leq i \leq k. \qquad (10)$$

-- Anschließend wird der nächste Pufferfüllstand berechnet gemäß folgender Vorschrift:

$$b_{j+1} = \max\left(0, b_j - p_j + p_j^1 + p_j^2 + \ldots + p_j^k\right). \qquad (11)$$

-- Schließlich wird die nächste Nachrichtenzahl gemäß folgender Vorschrift berechnet:

$$P_{j+1} := b_{max} - b_{j+1} + p_{j+1}. \qquad (12)$$

Im einfachsten Fall werden nur $p_1^i$ Erlaubnis-Angaben berechnet. Für größere j wird $p_{j+1} := p_{j+1}$ erwartet.

### 7. Versenden der Erlaubnis-Nachrichten:

An jeden in Uplink-Richtung mit dem Prozessor 400 gekoppelten Nachbarprozessor i (mit $1 \leq i \leq k$) wird je eine Erlaubnis-Nachricht

$$\text{Permit}\left(p_1^i, p_2^i, \ldots\right)$$

gesendet. Es werden selbstverständlich nur die in der jeweiligen Implementierung vorgesehenen Erlaubnis-Angaben an den jeweiligen Nachbarprozessor in der Erlaubnis-Nachricht versendet, im einfachsten Fall also nur die Erlaubnis-Angabe $p_1^i$.

Damit ist die erfindungsgemäße Vorgehensweise vollständig mit Ausnahme der Arbitrierungsstrategie beschrieben. Die Arbitrierungsstrategie beschreibt, wie die Anzahl Pj von vorgegebenen Erlaubnis-Angaben an die verschiedenen in Uplink-Richtung angeordneten Nachbarprozessoren verteilt wird.

Alternative Ausgestaltungen zur Realisierung einer solchen Arbitrierungsstrategie werden im Folgenden noch näher erläutert.

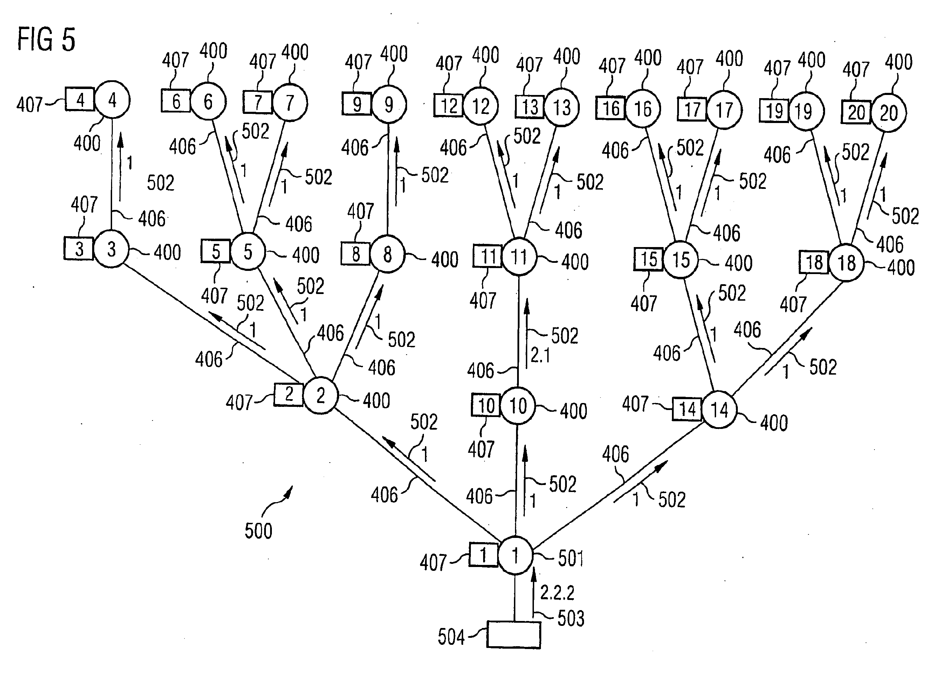

Zur Erläuterung der Arbitrierungsstrategie wird aus Gründen der Einfachheit eine Prozessor-Anordnung 500 gemäß einem zweiten Ausführungsbeispiel der Erfindung beschrieben, wie sie in **Fig.5** dargestellt ist.

Es ist jedoch anzumerken, dass die Erfindung keineswegs auf die in Fig.5 dargestellte Prozessor-Anordnung 500 beschränkt ist, sondern sie ist selbstverständlich auf alle in einer Baumstruktur angeordneten Prozessoren in einer Prozessor-Anordnung anwendbar, insbesondere auch auf die Prozessor-Anordnung 1800 gemäß dem ersten Ausführungsbeispiel der Erfindung.

Die Prozessoren gemäß dem zweiten Ausführungsbeispiel der Erfindung sind hinsichtlich der oben beschriebenen Vorgehensweise zur Ermittlung und Versendung und Berechnung der Erlaubnis-Angaben in gleicher Weise ausgestaltet wie die Prozessoren gemäß dem ersten Ausführungsbeispiel der Erfindung.

Wiederum wird angenommen, dass Sensordaten 404 jedes Prozessors 400 zu einem bestimmten Zeitpunkt von dem jeweiligen Sensor 402 ermittelt werden und dann in einer Sensornachricht von dem Prozessor 400 in Richtung des Portals zu dem Schnittstellenprozessor 501 und von dort zu dem Auswertesystem 504 gesendet werden. Es handelt sich somit in der Regel um mehrere zeitlich äquidistante Abfragen von Sensorwerten.

Nach Ermittlung der Sensordaten, d.h. allgemein nach Erhebung des Datenmaterials, kann somit jeder Prozessor 400 automatisch (zeitgesteuert) mit dem Einsammeln von Daten, d.h. mit dem Einsammeln von elektronischen Daten-Nachrichten aus der Uplink-Richtung beginnen, d.h. der oben beschriebene Algorithmus (Schritte 1 bis 7) startet in allen Prozessoren 400 gleichzeitig zu einem Taktzeitpunkt.

In diesem Fall genügt es, wenn der Schnittstellenprozessor 501 Erlaubnis-Nachrichten vom Typ

$$\mathtt{Permit}(\pi_0)$$

an die Nachbarprozessoren 400 des Schnittstellenprozessors 501 versendet, da die Datenlast der Prozessor-Anordnung von selbst in Richtung des Schnittstellenprozessors 501 "sackt", d.h. sich ausbreitet, und sich der maximale Datenfluss am Schnittstellenprozessor 501 in kurzer Zeit einstellt.

Damit werden also auch netzwerkweit, d.h. in der gesamten Prozessor-Anordnung 500 nur Erlaubnis-Nachrichten (Permit-Nachrichten) von diesem Typ versendet und die Abarbeitung des oben beschriebenen Algorithmus wird entsprechend vereinfacht.

Nach Abschluss eines Selbstorganisations-Verfahren, wie es in [1] beschrieben ist, liegt in jedem Prozessor 400 die Information vor, wie viele andere Prozessoren ni in Richtung jeden Uplinks i liegen (Durchsatz).

Daher wird gemäß diesem Ausführungsbeispiel der Erfindung folgende Arbitrierungsstrategie verwendet:

Für jeden Uplink-Prozessor 400 wird die Zahl

$$z_i \leq n_i \tag{13}$$

der tatsächlich eingetroffenen elektronischen Nachrichten 407 festgehalten. Wenn nun gemäß dem oben beschriebenen Algorithmus $P_1$ Permits zu vergeben sind, so werden die Uplinks in Schleife nacheinanderfolgend abgeprüft und es wird ein Permit erteilt bzw. um den Wert 1 erhöht, falls gilt:

$$z_i < n_i. \tag{14}$$

Dabei ist der Startpunkt der Schleife der um einen Wert 1 versetzte Endpunkt der Schleife der letzten Erlaubnis-Angaben-Vergabe (Permit-Vergabe).

Als anschauliches Beispiel für die Durchführung des Verfahrens sind in den Fig.5 bis Fig.16 die einzelnen Schritte in der Prozessor-Anordnung 500 dargestellt.

In diesem Beispiel ist ohne Einschränkung der Allgemeingültigkeit die Kapazität einer bidirektionalen Kommunikationsverbindung 406 zwischen zwei Prozessoren 400 auf c = 2 festgelegt und die Pufferspeichergröße mit $b_{max}$ = 4 begrenzt. Die zu übertragenden Daten sind in einer jeweiligen, dem Prozessor 400 zugeordneten Datennachricht 407 in den Fig.5 bis Fig.16 dargestellt, wobei mit der in der Datennachricht 407 angegebenen Zahl der jeweilige Prozessor, dem der jeweilige Sensor 401 eindeutig zugeordnet ist, eindeutig identifiziert wird.

Mit den Pfeilen sind jeweilige Erlaubnis-Nachrichten 502 bezeichnet und mit den jeweiligen den Pfeilen 502 zugeordneten Zahlen werden die Parameter der Erlaubnis-Nachricht bezeichnet. Gegebenenfalls werden an den Eingängen bzw. Ausgängen der bidirektionalen Kommunikationsverbindung 406 zwischen den Prozessoren 400 die Verwaltungsdaten $p_0$, $p_1$, ... und $p_2^i$, $p_3^i$, ... als jeweilige Ziffern an den Prozessoren 400 dargestellt, d.h. die zu erwartenden elektronischen Nachrichten 407 aus Uplink-Richtung bzw. die erhaltenen Erlaubnis-Angaben (Permits) aus Downlink-Richtung. Zur Illustration der Verwendung von Permits höherer Ordnung werden diese von dem Schnittstellenprozessor 501 oder womöglich, beispielsweise von Knoten 10 in Fig.5, eingesetzt.

In den Fig.5 bis Fig.16 sind der Nachrichtenfluss sowie die Pufferbelegung und die Permits sowie die jeweiligen elektronischen Nachrichten zu den jeweiligen Taktzeitpunkten dargestellt.

Wie in Fig.5 gezeigt ist, hat der Schnittstellenprozessor 501 eine maximale Pufferspeicherkapazität von vier elektronischen Nachrichten.

Da er von einem auch ihm zugeordneten Sensor eine Sensornachricht 407 empfängt, kann er im nächsten Zeittakt noch drei andere elektronische Nachrichten 407 von in Uplink-Richtung ihm benachbarten Nachbarprozessoren 400 empfangen.

Somit schickt er an jeden seiner unmittelbar ihm benachbarten Nachbarprozessoren 400 (Prozessor 2, 10, 14) eine Erlaubnis-Nachricht 501, in der angegeben ist, dass diese ihm in Downlink-Richtung im nächsten Zeittakt eine elektronische Nachricht übermitteln dürfen.

In entsprechender Weise arbeiten auch die anderen Prozessoren 400, da auch dort jeweils angenommen wird aus Gründen der einfacheren Erläuterung, dass jeweils nur eine Sensornachricht 407 gebildet wird, und jeweils entsprechend Nachrichten in Uplink-Richtung benachbarten Prozessoren im nachfolgenden Zeittakt empfangen werden können.

Im Folgenden wird ohne Einschränkung der Allgemeingültigkeit angenommen, dass zu jedem Taktzeitpunkt von dem Schnittstellenprozessor 501 zwei elektronische Nachrichten 407 an das Auswertungssystem 504 ausgelesen werden können.

In der folgenden Beschreibung wird jeweils abhängig von den in den Fig.5 bis Fig.16 angegebenen Nummern der jeweilige Prozessor bzw. die jeweilige Nachricht 407 bezeichnet.

So wird beispielsweise eine neunte Sensornachricht 407 jeweils mit dem Zeichen "9" in der Sensornachricht 407 bezeichnet und die neunte Sensornachricht 407 wurde von dem Sensor 402 des neunten Prozessors "9" 400 aufgezeichnet und von dem neunten Prozessor 400 zwischengespeichert und in Richtung des Schnittstellenprozessors 501 gesendet. Die entsprechende Nomenklatur wird auch für die anderen Sensornachrichten und Prozessoren verwendet.

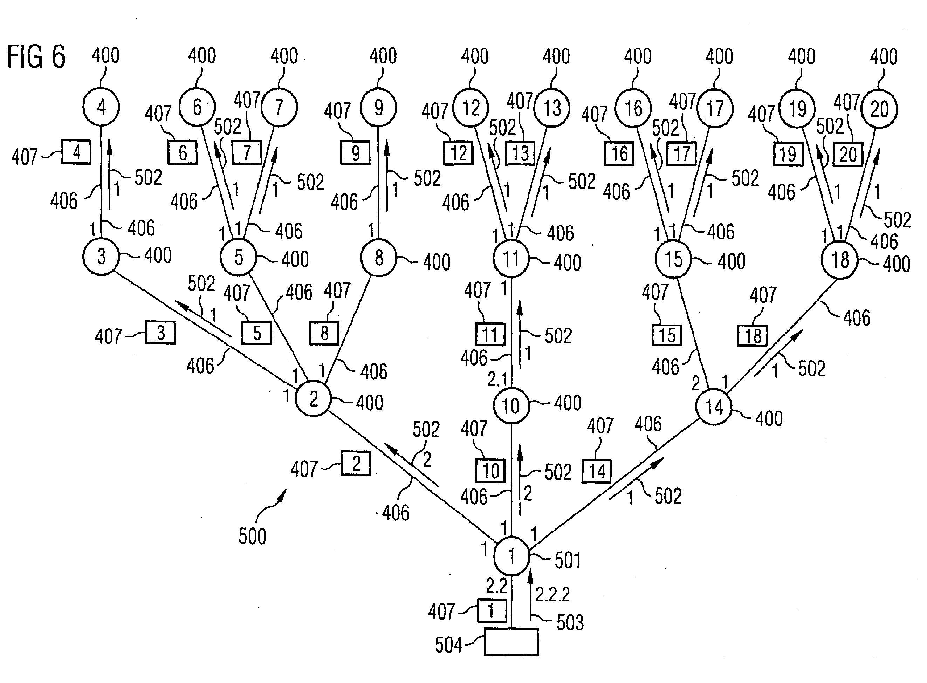

Die in den Fig.6 bis Fig.16 dargestellte Vorgehensweise ist derart, dass die Prozessoren 400 jeweils abhängig von den ihnen übermittelten Erlaubnis-Angaben 502 zu dem nächsten Taktzeitpunkt die gemäß der Erlaubnis-Angabe 502 entsprechende Anzahl von elektronischen Nachrichten in Richtung des Schnittstellenprozessors 501 zu dem ihm auf dem jeweiligen Nachrichtenpfad unmittelbar benachbarten Nachbarprozessor übermitteln.

**Fig.5** zeigt somit den Zustand, zu dem die Sensornachrichten 407 noch alle in den Pufferspeichern 401 der einzelnen Prozessoren 400 gespeichert sind (erster Taktzeitpunkt).

**Fig.6** zeigt die Prozessor-Anordnung 500 zu dem zweiten Taktzeitpunkt, wobei die erste Sensornachricht 407 schon an das Auswertesystem 504 weitergeleitet wird und die zweite Sensornachricht 407, die zehnte Sensornachricht 407 und die vierzehnte Sensornachricht 407 zu dem Schnittstellenprozessor 501 übermittelt werden.

Die dritte Sensornachricht 407, die fünfte Sensornachricht 407 und die achte Sensornachricht 407 werden von den jeweiligen Prozessoren 400 dem zweiten Prozessor 400 zugeführt, die elfte Sensornachricht 407 wird von dem elften Prozessor 400 an den zehnten Prozessor 400 übertragen und die fünfzehnte Sensornachricht 407 und die achtzehnte Sensornachricht 407 werden von den jeweiligen Prozessoren an den vierzehnten Prozessor 400 übertragen.

Ferner werden die vierte Sensornachricht 407 von dem vierten Prozessor an den dritten Prozessor 400 übertragen, die sechste Sensornachricht 407 und die siebte Sensornachricht 407 werden an den fünften Prozessor 400 übertragen, die neunte Sensornachricht 407 wird an den achten Prozessor 400 übertragen, die zwölfte Sensornachricht 407 und die dreizehnte Sensornachricht 407 werden an den elften Prozessor 400 übertragen, die sechzehnte Sensornachricht 407 und die siebzehnte Sensornachricht 407 werden an den fünfzehnten Prozessor 400 übertragen und die neunzehnte Sensornachricht 407 und die zwanzigste Sensornachricht 407 werden an den achtzehnten Prozessor 400 übertragen.

Ferner werden auch zu diesem Taktzeitpunkt die entsprechenden Erlaubnis-Nachrichten 502 von den Prozessoren in Uplink-Richtung zu den jeweiligen Nachbarprozessoren übertragen, wobei in diesem Zusammenhang anzumerken ist, dass von dem Schnittstellenprozessor 501, da der gesamte Pufferspeicher dort leer ist, zwei Nachrichten von dem zweiten Prozessor 400 und zwei Nachrichten dem zehnten Prozessor 400 ermöglicht sind zur Übertragung in dem nächsten anschließenden Taktzeitpunkt sowie eine Nachricht von dem vierzehnten Prozessor 400.

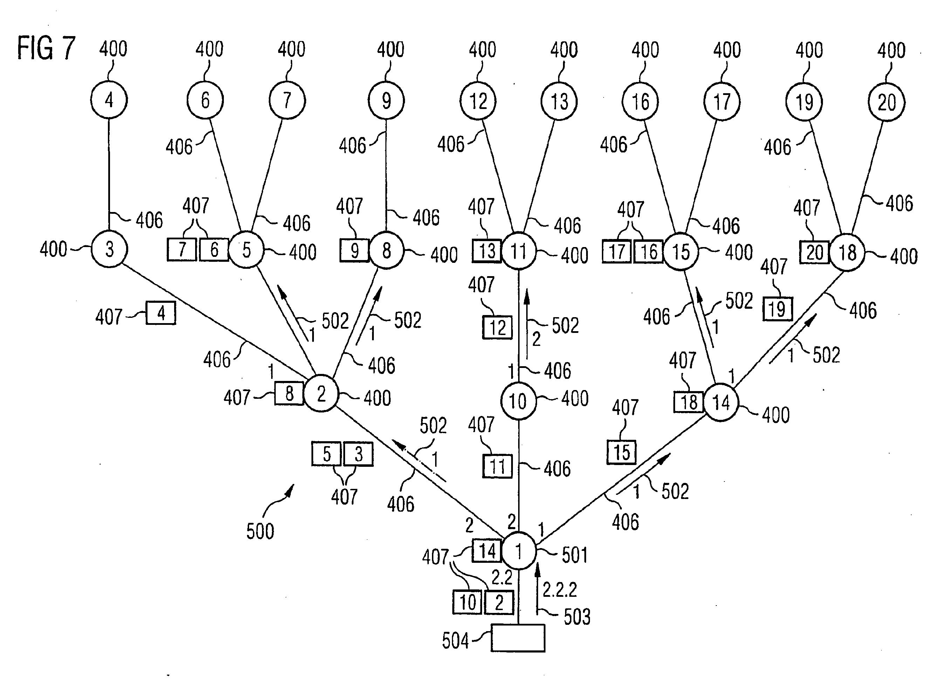

**Fig.7** zeigt die Prozessor-Anordnung zu dem dritten Taktzeitpunkt.

Wie Fig.7 zu entnehmen ist, werden die zweite Sensornachricht 407 und die zehnte Sensornachricht 407 aus der Prozessor-Anordnung 500 von dem Schnittstellenprozessor 501 in das Auswertesystem 504 übertragen. Die vierzehnte Sensornachricht 407 wird in dem Pufferspeicher 401 des Schnittstellenprozessors 501 gespeichert. Ferner werden die fünfte Sensornachricht 407 und die dritte Sensornachricht 407 von dem zweiten Prozessor 404 an den Schnittstellenprozessor 501 übertragen sowie die elfte Sensornachricht 407 von dem zehnten Prozessor 400 an den Schnittstellenprozessor 501 und die fünfzehnte Sensornachricht 407 von dem vierzehnten Prozessor 400 an den Schnittstellenprozessor 501.

Zu diesem Zeitpunkt ist die achte Sensornachricht 407 in dem Pufferspeicher 401 des zweiten Prozessors 400 gespeichert und die achtzehnte Sensornachricht 407 in dem Pufferspeicher 404 des vierzehnten Prozessors 400.

Die vierte Sensornachricht 407 wird von dem dritten Prozessor 400 an den zweiten Prozessor 400 übertragen sowie die zwölfte Sensornachricht 407 von dem elften Prozessor 400 an den zehnten Prozessor 400 und die neunzehnte Sensornachricht 407 von dem achtzehnten Prozessor 400 an den vierzehnten Prozessor 400.

Die siebte Sensornachricht 407 und die sechste Sensornachricht 407 sind in dem Pufferspeicher 401 des fünften Prozessors 400 gespeichert und die neunte Sensornachricht 407 ist in dem Pufferspeicher 401 des achten Prozessors 400 gespeichert. Ferner sind die dreizehnte Sensornachricht 407 in dem Pufferspeicher 401 des elften Prozessors 400, die siebzehnte Sensornachricht 407 und die sechzehnte Sensornachricht 407 in dem Pufferspeicher 401 des fünfzehnten Prozessors 400 und die zwanzigste Sensornachricht 407 in dem Pufferspeicher 401 des achtzehnten Prozessor 400 gespeichert.

Ferner werden Erlaubnis-Nachrichten 502 von dem Schnittstellenprozessor 501 an den zweiten Prozessor 400 und an den vierzehnten Prozessor 400 übertragen, in welchen den beiden Prozessoren zu dem nächsten Taktzeitpunkt die Erlaubnis gegeben wird, jeweils eine Sensornachricht 407 zu dem Schnittstellenprozessor 501 zu übermitteln.

Der zweite Prozessor 400 übermittelt jeweils eine Erlaubnis-Nachricht 502 an den fünften Prozessor 400 und an den achten Prozessor 400, jeweils ebenfalls mit der Maßgabe, zu dem nächsten Taktzeitpunkt dem zweiten Prozessor 400 jeweils maximal eine Sensornachricht 407 zu übermitteln.

Gemäß einer von dem zehnten Prozessor 400 an den elften Prozessor 400 übermittelten Erlaubnis-Nachricht 502 darf der elfte Prozessor 400 zu dem nächsten Taktzeitpunkt maximal zwei Sensornachrichten 404 an den zehnten Prozessor 400 übermitteln.

Der vierzehnte Prozessor 400 übermittelt an den fünfzehnten Prozessor 400 und an den achtzehnten Prozessor 400 jeweils eine Erlaubnis-Nachricht 502, in der jeweils angegeben ist, dass die beiden Prozessoren 400 zu dem nächsten Taktzeitpunkt jeweils maximal eine Sensornachricht an den vierzehnten Prozessor 400 übermitteln dürfen.

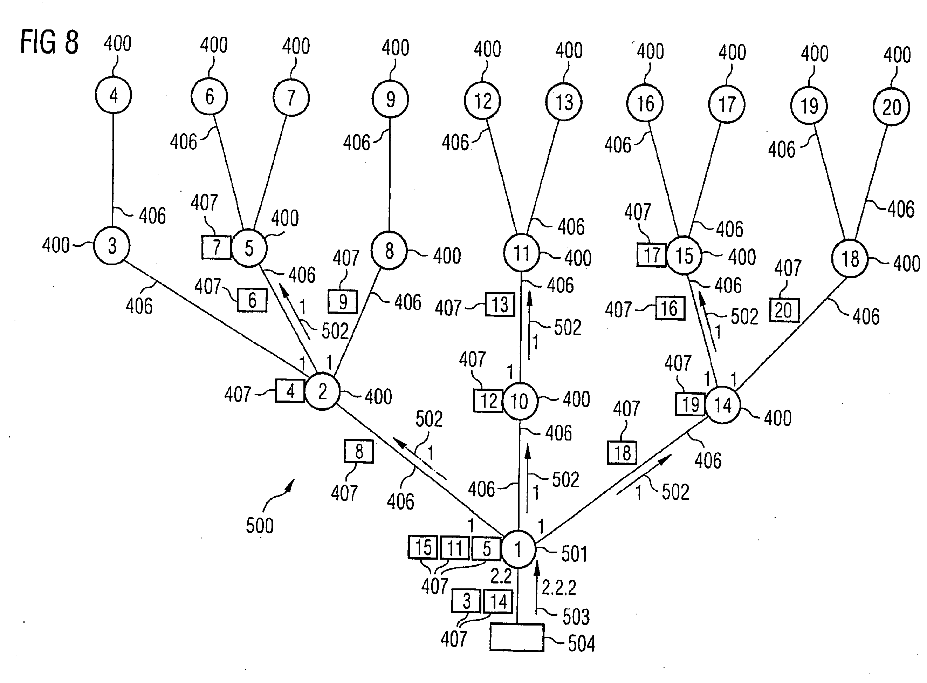

**Fig.8** zeigt die Prozessor-Anordnung 500 zu dem vierten Taktzeitpunkt.

Zu diesem Zeitpunkt werden zwei Sensornachrichten 404, nämlich die dritte Sensornachricht 407 und die vierzehnte Sensornachricht 407 von dem Schnittstellenprozessor 501 an das Auswertesystem 504 übertragen.

Der Schnittstellenprozessor 501 hat drei Sensornachrichten 404, nämlich die fünfzehnte Sensornachricht 407, die elfte Sensornachricht 407 und die fünfte Sensornachricht 407 in dessen Pufferspeicher 401 gespeichert.

Ferner werden die achte Sensornachricht 407 von dem zweiten Prozessor und die achtzehnte Sensornachricht von dem vierzehnten Prozessor an den Schnittstellenprozessor 501 übertragen.

In dem Pufferspeicher 401 des zweiten Prozessors 400 ist die vierte Sensornachricht 407 gespeichert, in dem Pufferspeicher 401 des zehnten Prozessors die zwölfte Sensornachricht 407 und in dem Pufferspeicher 401 des vierzehnten Prozessors 400 die neunzehnte Sensornachricht 407.

Von dem fünften Prozessor 400 wird gemäß der von ihm zuvor empfangenen Erlaubnis-Nachricht 502 eine, nämlich die sechste Sensornachricht 407 an den zweiten Prozessor 400 übermittelt, und der achte Prozessor 400 sendet die neunte Sensornachricht 407 an den zweiten Prozessor 400. Der elfte Prozessor 400 sendet die dreizehnte Sensornachricht 407 an den zehnten Prozessor 400, der fünfzehnte Prozessor 400 sendet die sechzehnte Sensornachricht 407 an den vierzehnten Prozessor 400 und der achtzehnte Prozessor 400 sendet die zwanzigste Sensornachricht 407 an den vierzehnten Prozessor 400.

In dem Pufferspeicher 401 des fünften Prozessors 400 ist noch die siebte Sensornachricht 407 gespeichert und in dem Pufferspeicher 401 des fünfzehnten Prozessors 400 ist die siebzehnte Sensornachricht 407 zwischengespeichert.

Gemäß der oben beschriebenen Arbitrierungsstrategie sendet zu dem vierten Taktzeitpunkt der Schnittstellenprozessor 501 drei Erlaubnis-Nachrichten 502 an seine Uplink-Nachbar-Prozessoren, jeweils eine an den zweiten Prozessor 400, den zehnten Prozessor 400 und den vierzehnten Prozessor 400, in denen angegeben ist, dass jeder der drei Prozessoren 400 zu dem nächsten Taktzeitpunkt jeweils maximal eine Sensornachricht 407 an den Schnittstellenprozessor 501 übermitteln darf.

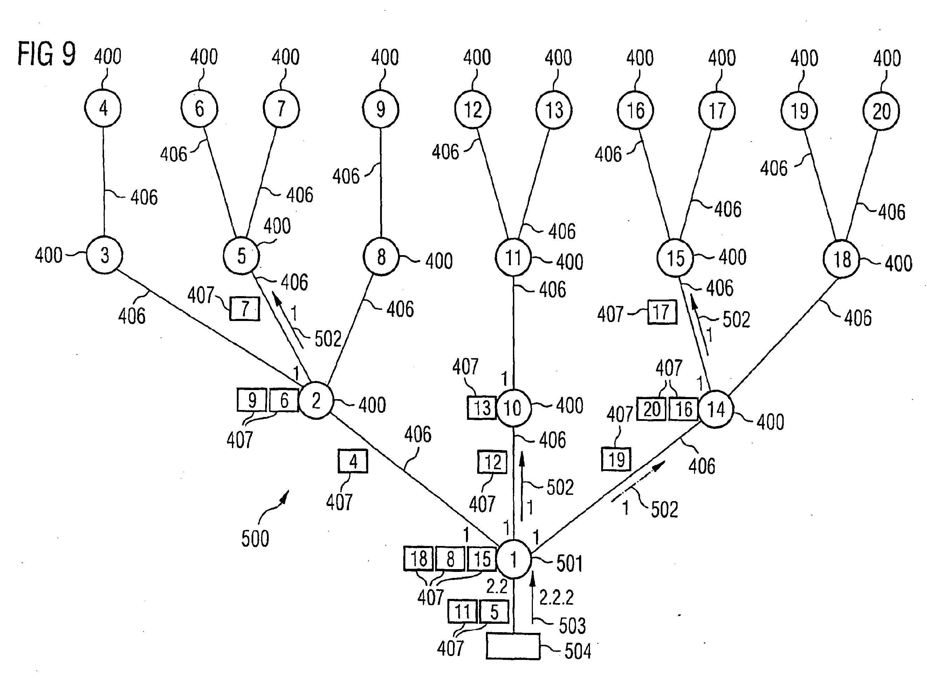

Ferner übermittelt der zweite Schnittstellenprozessor 400 eine Erlaubnis-Nachricht 502 an den fünften Prozessor 500 mit der Maßgabe, dass der fünfte Prozessor 400 zu dem nächsten Taktzeitpunkt maximal eine Sensornachricht an den zweiten Prozessor übertragen darf. Der zehnte Prozessor 400 übermittelt dem elften Prozessor 400 eine Erlaubnis-Nachricht und erlaubt diesem, zu dem nächsten Taktzeitpunkt dem zehnten Prozessor 400 eine Sensornachricht zu übermitteln. Gemäß einer von dem vierzehnten Prozessor 400 an den fünfzehnten Prozessor 400 übermittelten Erlaubnis-Nachricht 502 ist es dem fünfzehnten Prozessor 400 ermöglicht, zu dem nächsten Taktzeitpunkt, der in **Fig. 9** dargestellt ist, maximal eine Sensornachricht 407 an den vierzehnten Prozessor 400 zu übermitteln.

**Fig.9** zeigt die Prozessor-Anordnung 500 zu dem fünften Taktzeitpunkt.

Zu diesem Taktzeitpunkt werden zwei Sensornachrichten, nämlich die elfte Sensornachricht 407 und die fünfte Sensornachricht 407 aus dem Pufferspeicher 401 des Schnittstellenspeichers an das Auswertesystem 504 weitergeleitet.

In dem Pufferspeicher 401 des Schnittstellenprozessors 501 sind drei Sensornachrichten gespeichert, nämlich die achtzehnte Sensornachricht 407, die achte Sensornachricht 407 und die fünfzehnte Sensornachricht 407.

Von dem zweiten Prozessor 400 wird die vierte Sensornachricht 407 zu dem Schnittstellenprozessor 501 übertragen, von dem zehnten Prozessor 400 die zwölfte Sensornachricht 407 und von dem vierzehnten Prozessor 400 die neunzehnte Sensornachricht 407.

In dem Pufferspeicher 401 des zweiten Prozessors 400 sind die neunte Sensornachricht 407 und die sechste Sensornachricht 407 gespeichert, in dem Pufferspeicher 401 des zehnten Prozessors 400 die dreizehnte Sensornachricht 407 und in dem Pufferspeicher 401 des vierzehnten Prozessors 400 die zwanzigstes Sensornachricht 407 und die sechzehnte Sensornachricht 407.

Ferner wird zu dem fünften Taktzeitpunkt von dem fünften Prozessor 400 die siebte Sensornachricht 407 an den zweiten Prozessor 400 übertragen und die siebzehnte Sensornachricht 407 wird von dem fünfzehnten Prozessor 400 an den vierzehnten Prozessor 400 übertragen.

Gemäß der oben beschriebenen Arbitrierungsstrategie sendet zu dem fünften Taktzeitpunkt der Schnittstellenprozessor 501 zwei Erlaubnis-Nachrichten 502 an seine Uplink-Nachbar-Prozessoren, eine Erlaubnis-Nachricht 502 an den zehnten Prozessor 400 und eine Erlaubnis-Nachricht 502 an den vierzehnten Prozessor 400, in denen jeweils angegeben ist, dass jeder der beiden Prozessoren zu dem nächsten Taktzeitpunkt jeweils maximal eine Sensornachricht 407 an den Schnittstellenprozessor 501 übermitteln darf.

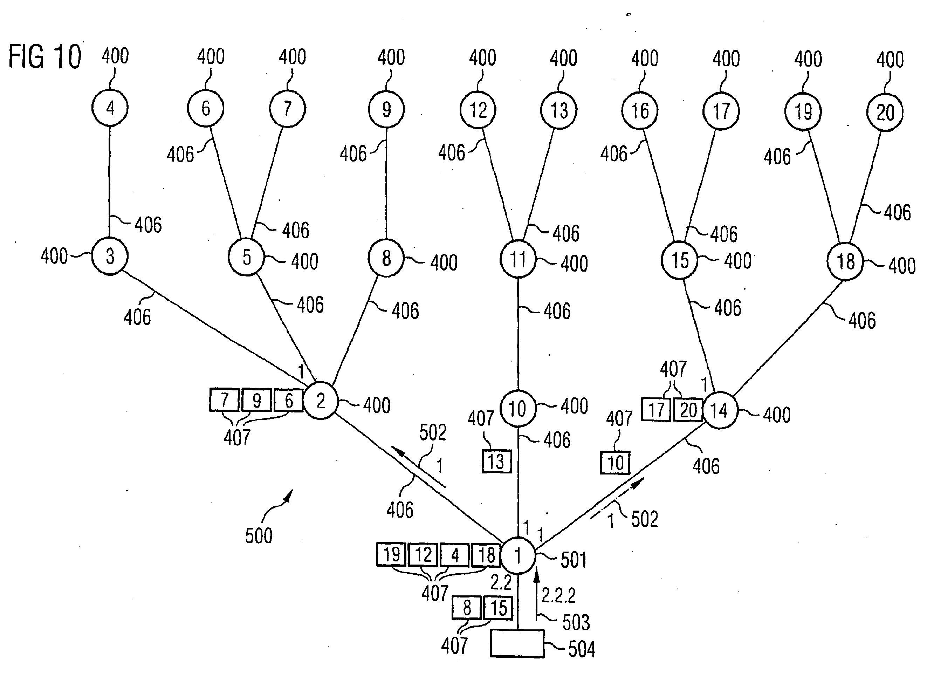

Ferner übermittelt der zweite Schnittstellenprozessor 400 eine Erlaubnis-Nachricht 502 an den fünften Prozessor 500 mit der Maßgabe, dass der fünfte Prozessor 400 zu dem nächsten Taktzeitpunkt maximal eine Sensornachricht an den zweiten Prozessor übertragen darf. Gemäß einer von dem vierzehnten Prozessor 400 an den fünfzehnten Prozessor 400 übermittelten Erlaubnis-Nachricht 502 ist es dem fünfzehnten Prozessor 400 ermöglicht, zu dem nächsten Taktzeitpunkt, der in **Fig.10** dargestellt ist, maximal eine Sensornachricht 407 an den vierzehnten Prozessor 400 zu übermitteln.

Zu dem sechsten Taktzeitpunkt werden von dem Schnittstellenprozessor 501 an das Auswertesystem 504 wiederum zwei Sensornachrichten 404, nämlich die achte Sensornachricht 407 und die fünfzehnte Sensornachricht 407 übertragen (vergleiche Fig.10).

Ferner sind zu diesem Taktzeitpunkt die neunzehnte Sensornachricht 407, die zwölfte Sensornachricht 407, die vierte Sensornachricht 407 und die achtzehnte Sensornachricht 407 in dem Pufferspeicher 401 des Schnittstellenprozessors 501 gespeichert.

Von dem zehnten Prozessor 400 wird die dreizehnte Sensornachricht 407 und von dem vierzehnten Prozessor 400 die sechzehnte Sensornachricht 407 an den Schnittstellenprozessor 501 übertragen.

In dem Pufferspeicher 401 des zweiten Prozessors 400 sind zu diesem Taktzeitpunkt die siebte Sensornachricht 407, die neunte Sensornachricht 407 und die sechste Sensornachricht 407 gespeichert.

In dem Pufferspeicher 401 des vierzehnten Prozessors 400 sind zu diesem Zeitpunkt die siebzehnte Sensornächricht 407 und die zwanzigste Sensornachricht gespeichert.

Gemäß der oben beschriebenen Arbitrierungsstrategie sendet zu dem sechsten Taktzeitpunkt der Schnittstellenprozessor 501 zwei Erlaubnis-Nachrichten 502 an seine Uplink-Nachbar-Prozessoren, eine Erlaubnis-Nachricht 502 an den zweiten Prozessor 400 und eine Erlaubnis-Nachricht 502 an den vierzehnten Prozessor 400, in denen jeweils angegeben ist, dass jeder der beiden Prozessoren zu dem nächsten Taktzeitpunkt jeweils maximal eine Sensornachricht 407 an den Schnittstellenprozessor 501 übermitteln darf.

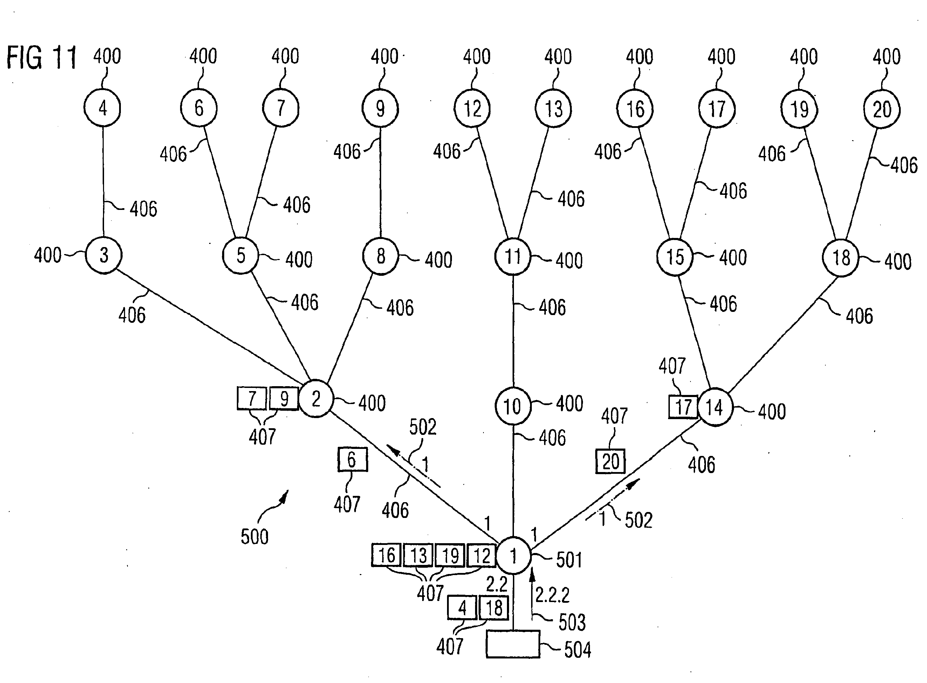

**Fig.11** zeigt die Prozessor-Anordnung 500 zu dem siebten Taktzeitpunkt des erfindungsgemäßen Verfahrens.

Zu diesem Taktzeitpunkt werden von dem Schnittstellenprozessor 501 die vierte Sensornachricht 407 und die achtzehnte Sensornachricht 407 aus dessen Pufferspeicher 401 ausgelesen und an das Auswertesystem 504 übermittelt.

In dem Pufferspeicher 401 des Schnittstellenprozessors 501 sind zu diesem Taktzeitpunkt die sechzehnte Sensornachricht 407, die dreizehnte Sensornachricht 407, die neunzehnte Sensornachricht 407 und die zwölfte Sensornachricht 407 gespeichert.

Von dem zweiten Prozessor 404 wird die sechste Sensornachricht 407 und von dem vierzehnten Prozessor 400 wird die zwanzigste Sensornachricht 407 zu dem Schnittstellenprozessor 501 übertragen.

Die siebte Sensornachricht 407 und die neunte Sensornachricht 407 sind in dem Pufferspeicher 401 des zweiten Prozessors 400 gespeichert und die siebzehnte Sensornachricht 407 ist zu diesem Taktzeitpunkt in dem Pufferspeicher 401 des vierzehnten Prozessors 400 gespeichert.

Gemäß der oben beschriebenen Arbitrierungsstrategie sendet zu dem siebten Taktzeitpunkt der Schnittstellenprozessor 501 zwei Erlaubnis-Nachrichten 502 an seine Uplink-Nachbar-Prozessoren, eine Erlaubnis-Nachricht 502 an den zweiten Prozessor 400 und eine Erlaubnis-Nachricht 502 an den vierzehnten Prozessor 400, in denen jeweils angegeben ist, dass jeder der beiden Prozessoren zu dem nächsten Taktzeitpunkt jeweils maximal eine Sensornachricht 407 an den Schnittstellenprozessor 501 übermitteln darf.

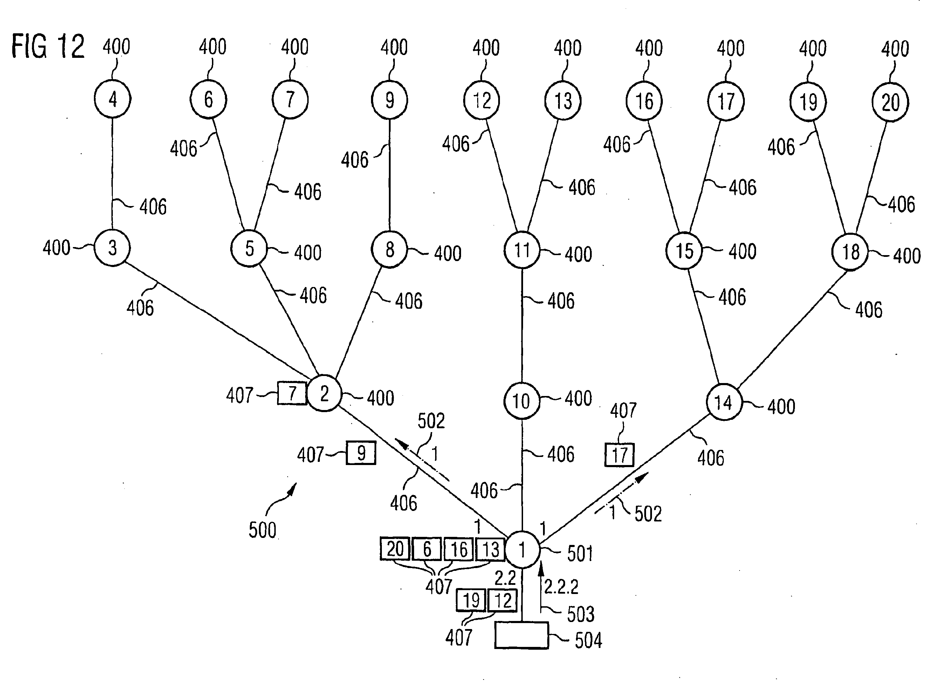

**Fig.12** zeigt die Prozessor-Anordnung 500 zu dem achten Taktzeitpunkt, zu dem die neunzehnte Sensornachricht 407 und die zwölfte Sensornachricht 407 an das Auswertesystem 504 übermittelt werden.

In dem Pufferspeicher 401 des Schnittstellenprozessors 501 sind zu diesem Taktzeitpunkt die zwanzigste Sensornachricht 407, die sechste Sensornachricht 407, die sechzehnte Sensornachricht 407 und die dreizehnte Sensornachricht 407 gespeichert.

Von dem zweiten Prozessor 400 wird die neunte Sensornachricht 407 und von dem vierzehnten Prozessor 400 wird die siebzehnte Sensornachricht 407 zu dem Schnittstellenprozessor 501 übertragen.

In dem Pufferspeicher 401 des zweiten Prozessors 400 ist die siebte Sensornachricht 407 zwischengespeichert.

Gemäß der oben beschriebenen Arbitrierungsstrategie sendet zu dem achten Taktzeitpunkt der Schnittstellenprozessor 501 zwei Erlaubnis-Nachrichten 502 an seine Uplink-Nachbar-Prozessoren, eine Erlaubnis-Nachricht 502 an den zweiten Prozessor 400 und eine Erlaubnis-Nachricht 502 an den vierzehnten Prozessor 400, in denen jeweils angegeben ist, dass jeder der beiden Prozessoren zu dem nächsten Taktzeitpunkt jeweils maximal eine Sensornachricht 407 an den Schnittstellenprozessor 501 übermitteln darf.

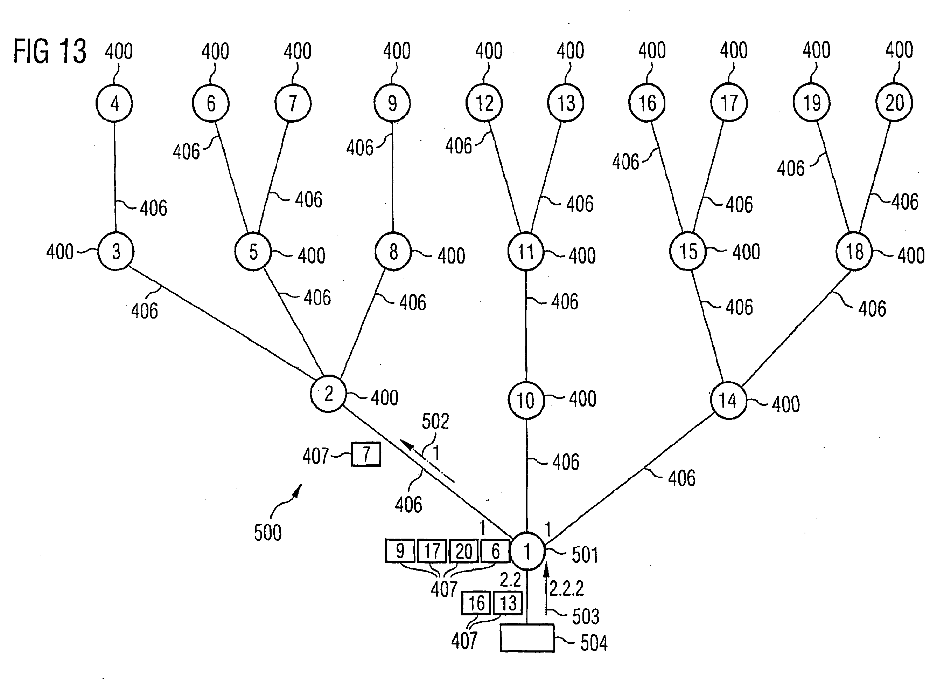

**Fig.13** zeigt die Prozessor-Anordnung 500 zu dem neunten Taktzeitpunkt des Verfahrens.

Zu diesem Taktzeitpunkt werden die sechzehnte Sensornachricht 407 und die dreizehnte Sensornachricht 407 von dem Schnittstellenprozessor 501 an das Auswertesystem übertragen.

In dem Pufferspeicher 401 des Schnittstellenprozessors 501 sind die neunte Sensornachricht 407, die siebzehnte Sensornachricht 407, die zwanzigste Sensornachricht 407 und die sechste Sensornachricht 407 gespeichert.

Von dem zweiten Prozessor 400 wird die siebte Sensornachricht 407 an den Schnittstellenprozessor 501 übertragen.

Gemäß der oben beschriebenen Arbitrierungsstrategie sendet zu dem neunten Taktzeitpunkt der Schnittstellenprozessor 501 eine Erlaubnis-Nachricht 502 an den zweiten Prozessor 400, in der angegeben ist, dass der zweite Prozessor 400 zu dem nächsten Taktzeitpunkt maximal eine Sensornachricht 407 an den Schnittstellenprozessor 501 übermitteln darf.

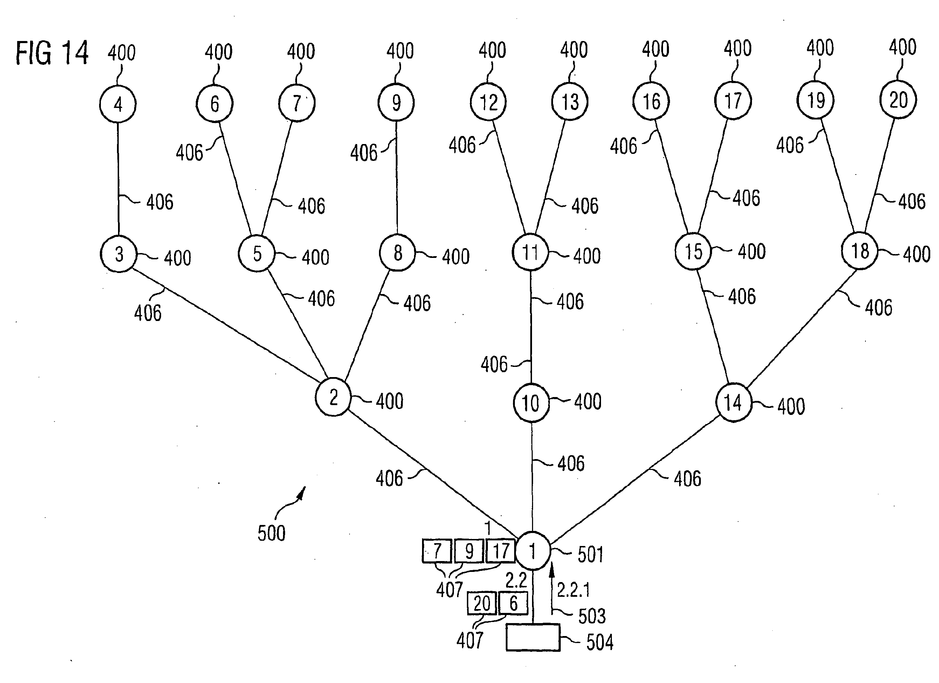

**Fig.14** zeigt die Prozessor-Anordnung 500 zu dem zehnten Taktzeitpunkt des Verfahrens.

Zu diesem Zeitpunkt werden die zwanzigste Sensornachricht 407 und die sechste Sensornachricht 407 von dem Schnittstellenprozessor 501 an das Auswertesystem 504 übertragen.

In dem Pufferspeicher 401 des Schnittstellenprozessors 501 sind die siebzehnte Sensornachricht 407, die neunte Sensornachricht 407 und die siebzehnte Sensornachricht 407 gespeichert.

Die Pufferspeicher aller anderen Prozessoren 400 der Prozessor-Anordnung 500 sind nunmehr leer.

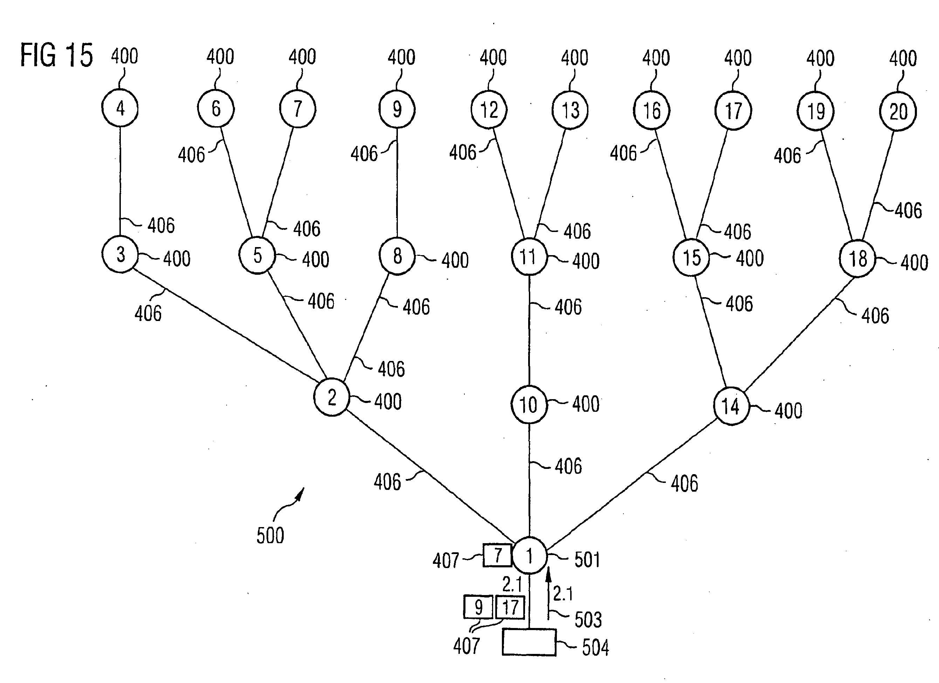

**Fig.15** zeigt die Prozessor-Anordnung 500 zu dem elften Taktzeitpunkt, zu dem die neunzehnte Sensornachricht 407 und die siebzehnte Sensornachricht 407 von dem Schnittstellenprozessor 501 an das Auswertesystem 504 übertragen werden.

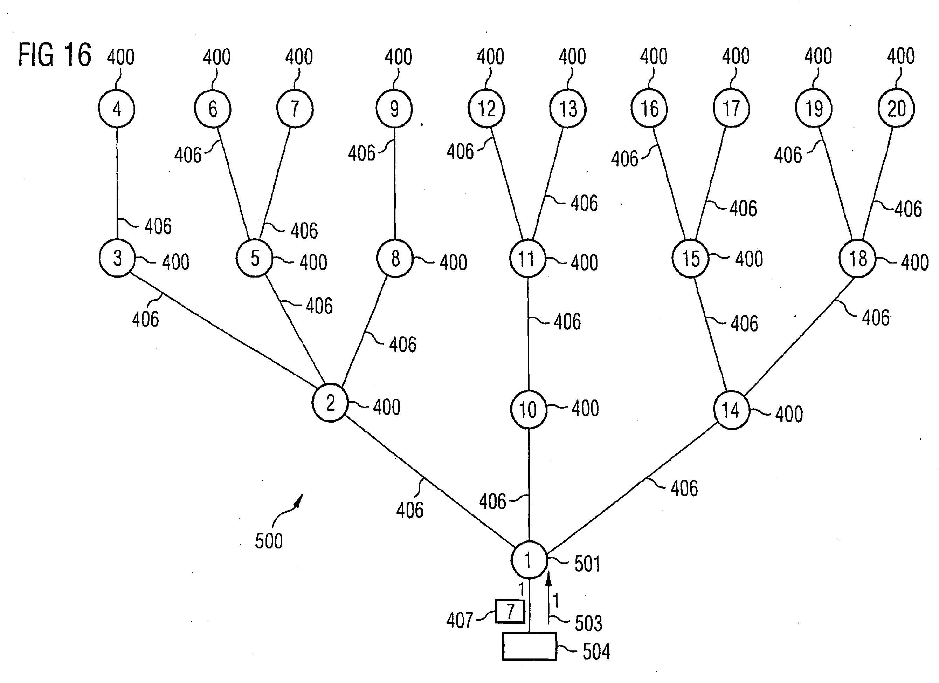

In dem Pufferspeicher 401 des Schnittstellenprozessors 501 ist lediglich noch die siebte Sensornachricht 407 gespeichert, welche zu dem in **Fig.16** dargestellten Taktzeitpunkt (zwölfter Taktzeitpunkt) an das Auswertesystem 504 übertragen wird.

Wie den Figuren zu entnehmen ist, ist der Datenstrom in Richtung des Schnittstellenprozessors 501 schon ab dem in Fig.7 dargestellten Taktzeitpunkt maximal, d.h. schon zu diesem Zeitpunkt werden immer zwei Sensornachrichten 404 von dem Schnittstellenprozessor 501 an das Auswertesystem 504 übertragen. Diese optimale Auslastung der Schnittstellen-Kommunikationsverbindung bleibt so lange aufrechterhalten, bis alle Sensornachrichten 407 aus der Prozessor-Anordnung 500 an das Auswertesystem 504 übertragen wurden. Die Daten, d.h. die Sensornachrichten 407 "sacken" so weit in Richtung des Schnittstellenprozessors 501 wie möglich und verlassen dann die Prozessor-Anordnung 500 in geordneter Weise und ohne Datenkollision.

Gemäß einem alternativen Ausführungsbeispiel der Erfindung ist es vorgesehen, dass die Sensornachrichten 407 und damit die Sensordaten, von dem Schnittstellenprozessor 501 aus abgefragt werden, d.h. jeder Prozessor 400 der Prozessor-Anordnung 500 beginnt erst dann mit dem Erfassen von Daten aus seinen mit ihm verbundenen Uplink-Nachbar-Prozessoren, wenn er die erste Erlaubnis-Nachricht 502 von einem in Downlink-Richtung mit dem Prozessor 400 gekoppelten Nachbarprozessor erhalten hat.

Je nach Anzahl der Verzweigungen in der Nähe des Schnittstellenprozessors 501 kann sich somit die Zeit verlängern, bis sich ein maximaler Datenfluss an dem Schnittstellenprozessor 501 einstellt, da räumlich entferntere Netzwerkteile erst nach Ablauf einer Latenzzeit, die sich aus der Entfernung ergibt, Daten transportieren.

Um diesem Effekt entgegenzuwirken, kann der Schnittstellenprozessor 501 komplexere Erlaubnis-Nachrichten verschicken, beispielsweise vom Typ Permit($\pi_0$, $\pi_1$, $\pi_2$). Die Nachbarprozessoren werden dann maximal Nachrichten vom Typ Permit($\pi_0$, $\pi_1$) und deren Nachbarprozessoren wieder Nachrichten vom einfachen Typ versenden. Der Effekt ist eine höhere Durchflussgeschwindigkeit in der Nähe des Schnittstellenprozessors 501 zu Beginn der Datenabfrage und damit in der Regel ein schnelleres Erreichen des maximalen Daten-Durchflusses.

Im Beispiel von den Fig.5 bis Fig.16 wird von dem Schnittstellenprozessor 501 eine solche komplexe Erlaubnis-Nachricht verwendet (in den Figuren bezeichnet mit dem Bezugszeichen 503).

Da bei dem Schnittstellenprozessor 501 drei Uplink-Rechner vorgesehen sind, ergibt sich in dem Beispiel bereits, dass nur Nachrichten vom einfachen Typ verwendet werden.

Bei einem Beispiel, bei dem der Schnittstellenprozessor 501 ein oder zwei Nachbarprozessoren in Uplink-Richtung aufweist, würde dieser Erlaubnis-Nachrichten des Typs Permit($\pi_0$, $\pi_1$) versenden.

Die Arbitrierungsstrategie kann auch gemäß diesem Ausführungsbeispiel identisch zum vorangegangenen Beispiel gewählt werden.

Gemäß einer alternativen Ausführungsform, im Folgenden auch bezeichnet als eine spontane (selektive) Datensammlung mit Botschafternachrichten, werden Daten, d.h. Sensornachrichten nur dann gesammelt, wenn spezielle Ereignisse auftreten, beispielsweise eine Gewichtsänderung auf einen Drucksensor der Prozessor-Anordnung 500.

In diesem Fall kann eine Punkt-zu-Punkt-Nachricht in Downlink-Richtung geschickt werden, um den Dateneingang anzukündigen. Mehrere solcher Botschafternachrichten können zu einer Botschafternachricht zusammengefasst werden, die als Parameter die Anzahl solcher Nachrichten enthält. Jeder Uplink-Prozessor kann in diesem Fall mit der Zahl ni der Botschafternachricht versehen werden (mit eventuell späterer Änderung, wenn weitere Botschafternachrichten eintreffen). Die Zahl $n_i$ ersetzt dann die Durchsatzzahl aus dem vorangegangen Beispiel, so dass die weitere Vorgehensweise dann identisch zu der oben beschriebenen ist.

Bei Verzicht auf Botschafternachrichten können spontan entstehende Nachrichten auch mittels einer anderen Arbitrierungsstrategie gesammelt werden. Dazu werden in jedem Prozessor 400 ständig Erlaubnis-Nachrichten an die Uplink-Nachbarprozessoren geschickt.

So lange keine Nachrichten von diesen eintreffen, wird reihum jeweils eine Erlaubnis-Angabe weitergegeben. Etabliert sich ein Datenfluss von einem oder mehreren Uplink-Prozessoren, so erhalten diese häufiger ein Permit als die Uplink-Prozessoren, die keine Daten liefern (beispielsweise im Verhältnis 10:1).

Die Vorteile der oben beschriebenen Vorgehensweise sind insbesondere die folgenden:

- Die in der Prozessor-Anordnung enthaltenen Sensornachrichten werden kollisionsfrei von den jeweiligen Prozessoren zu dem Schnittstellenprozessor geleitet.
- Der Datenstrom bei dem Schnittstellenprozessor der Sensornachrichten wird nach einer kurzen Latenzzeit maximal, d.h. c Nachrichten pro Zeittakt. Daher ist die Geschwindigkeit des Datenauslesens aus der Prozessor-Anordnung bzw. die Auslesezeit minimal.
- Zur Gewährleistung eines maximalen Datenstroms beim Schnittstellenprozessor genügt eine Puffergröße

$$b_{max} = 2c.$$

Werden Erlaubnis-Angaben höherer Ordnung, d.h. $p_2^i, p_3^i, \ldots$ vergeben, so lässt sich der Pufferspeicher sogar noch weiter verkleinern.

- Das Verfahren weist eine einfache Struktur auf und benötigt skalierbar wenig Speicherplatz.

In diesem Dokument sind folgende Veröffentlichungen zitiert:

[1] WO 03/48953 A2

[2] J. M. Rabaey et al, Pico Radio Supports ad hoc ultra-low power wireless networking, I Triple E Computer 33 (7), Seiten 42-48, 2000;

[3] J. M. Rabaey et al, Pico Radios for wireless sensor networks: The next challenge in ultra-low power design, ISSCC, 2002;

[4] S. Madden et al, Tag: A tiny aggregation service for athock sensor networks, Technical report, Inter research IRB-TR-02-011, August 2002

[5] "Quantum Flow Control" Quantum Flow Control Version 2.0, XX, XX, 25. Juli 1995 (1995-07-25), Seite COMPLETE, XP002919915

[6] A. Pombortsis et al.: "A novel flow control and switching strategy for preventing hotspot congestion in multistage networks", Microprocessors and Microsystems, IPC Business Press Ltd. London, GB, Bd. 17, Nr. 7, 1. September 1993 (1993-09-01), Seiten 403-410, XP000397912, ISSN: 0141-9331

**Bezugszeichenliste**

100    Prozessor-Anordnung
101    Prozessor
102    Schnittstellenprozessor

103    Kommunikationsverbindung
104    Kommunikationsverbindung
105    Defekt

200    Prozessor-Anordnung
201    Prozessor
202    Schnittstellenprozessor
203    Kommunikationsverbindung
204    Kommunikationsverbindung

300    Textilgewebestruktur
301    Nicht leitfähiger Faden
302    Erster elektrisch leitfähiger Faden
303    Prozessorelement
304    Datenübertragungs-Faden
305    Kreuzungspunkt
306    Schutz
307    Zweiter elektrisch leitfähiger Faden

400    Prozessor
401    Pufferspeicher
402    Sensor
403    Elektrische Leitung
404    Sensordaten
405    Datenflussrichtung
406    Bidirektionale Kommunikationsverbindung
407    Sensornachricht

500    Prozessor-Anordnung
501    Schnittstellenprozessor
502    Erlaubnisnachricht
503    Komplexe Erlaubnisnachricht
504    Auswertesystem

1700    Grobmaschiges Grundgewebe

1800    Prozessor-Anordnung
1801    Schnittstellenprozessor
1802    Auswertesystem

**Patentansprüche**

1.  Prozessor-Anordnung (500),

• mit mindestens einem Schnittstellen-Prozessor (501), der eine Nachrichtenschnittstelle der Prozessor-Anordnung (500) bereitstellt,
• mit einer Vielzahl von Prozessoren (400), die in einer Baumstruktur miteinander gekoppelt sind und elektronische Nachrichten (407) austauschen können, wobei zumindest teilweise nur die einander örtlich direkt benachbart angeordneten Prozessoren (400) miteinander zum Austausch elektronischer Nachrichten (407) gekoppelt sind, **dadurch gekennzeichnet dass**
• jeder Prozessor (400) der Vielzahl von Prozessoren (400) einen ihm zugeordneten Pufferspeicher (401) aufweist, in dem eine vorgegebene Anzahl von elektronischen Nachrichten (407), welche der Prozessor (400) von einem jeden in Nachrichtenflussrichtung weg von dem Schnittstellenprozessor (501) angeordneten Nachbar-Prozessor (400) empfängt, zwischengespeichert werden können,
• bei jedem Prozessor (400) der Vielzahl von Prozessoren (400) ein Sensor (402) und/oder ein Aktor zugeordnet und mit dem jeweiligen Prozessor (400) gekoppelt ist, wobei Sensordaten und/oder Aktordaten in den elektronischen Nachrichten (407) von bzw zu dem Schnittstellen-Prozessor (501) übertragen werden,

• jeder Prozessor (400) der Vielzahl von Prozessoren (400) derart eingerichtet ist, dass er eine von einem in Nachrichtenflussrichtung hin zu dem Schnittstellenprozessor (501) angeordneten Nachbar-Prozessor (400) gesendete Erlaubnis-Nachricht (502) mit einer Erlaubnis-Angabe empfängt und verarbeitet, wobei mit der Erlaubnis-Angabe angegeben wird, wie viele elektronische Nachrichten (407) der Prozessor (400) an den Nachbar-Prozessor (400) zu einem vorgegebenen Zeitpunkt oder während eines vorgegebenen Zeitraums senden darf, wobei die Erlaubnis-Angabe basierend auf einer Ermittlung der zukünftigen Belegung des Pufferspeichers (401) des Nachbar-Prozessors (400) ermittelt wird, und wobei der Prozessor (400) nur maximal so viele elektronische Nachrichten (407) an den Nachbar-Prozessor (400) zu dem vorgegebenen Zeitpunkt oder während des vorgegebenen Zeitraums sendet, wie.in der Erlaubnis-Angabe vorgegeben.

2.  Prozessor-Anordnung (500) gemäß Anspruch 1,
    bei der die Prozessoren (400) der Prozessor-Anordnung (500) synchron getaktet werden hinsichtlich der Verarbeitung und Weiterleitung einer oder mehrerer elektronischer Nachrichten (407).

3.  Prozessor-Anordnung (500) gemäß Anspruch 1 oder 2,
    bei der jeder Prozessor (400) der Prozessor-Anordnung (400) derart eingerichtet ist, dass in jedem Zeitintervall zwischen einem ersten Zeittakt und einem zweiten Zeittakt folgende Schritte durchführbar sind:

    • es wird eine Erlaubnis-Nachricht (502) mit einer Erlaubnis-Angabe des ersten Zeittakts des jeweiligen Prozessors (400) eingelesen,
    • es wird die Belegung des Pufferspeichers (401) des jeweiligen Prozessors (400) für zumindest den zweiten Zeittakt berechnet,
    • es wird eine neue Erlaubnis-Nachricht (502) mit einer neuen Erlaubnis-Angabe gebildet abhängig von der berechneten Belegung des Pufferspeicher (401) des jeweiligen Prozessors (400) und als neue elektronische Nachricht in Nachrichtenflussrichtung weg von dem Schnittstellen-Prozessor (501) zu einem Nachbar-Prozessor (400) zu dem zweiten Zeittakt übertragen.

4.  Prozessor-Anordnung gemäß Anspruch 1 oder 2,
    bei der jeder Prozessor (400) der Prozessor-Anordnung (500) in jedem Zeitintervall zwischen einem ersten Zeittakt und einem zweiten Zeittakt folgende Schritte durchführt:

    • es wird eine Erlaubnis-Nachricht (502) mit einer Erlaubnis-Angabe des ersten Zeittakts des jeweiligen Prozessors (400) eingelesen,
    • es wird die Belegung des Pufferspeichers (401) des jeweiligen Prozessors (400) für zumindest den zweiten. Zeittakt berechnet,
    • es wird eine neue Erlaubnis-Nachricht (502) mit einer neuen Erlaubnis-Angabe gebildet abhängig von der berechneten Belegung des Pufferspeichers (401) des jeweiligen Prozessors (400) und als neue elektronische Nachricht in Nachrichtenflussrichtung weg von dem Schnittstellen-Prozessor (501) zu einem Nachbar-Prozessor (400) zu dem zweiten Zeittakt übertragen.

5.  Textilgewebestruktur (300) mit einer Prozessor-Anordnung (500) gemäß einem der Ansprüche 1 bis 4,

    • bei der die Prozessoren (400) und/oder Sensoren (402) und/oder Aktoren in der Textilgewebestruktur (300) angeordnet sind,
    • mit elektrisch leitfähigen Fäden (302, 307), welche die Prozessoren (400) miteinander koppeln,
    • mit leitfähigen Datenübertragungs-Fäden (304), welche die Prozessoren (400) miteinander koppeln, und
    • mit elektrisch nicht-leitfähigen Fäden (301).

6.  Textilgewebestruktur (300) gemäß Anspruch 5,
    bei der die elektrisch leitfähigen Fäden (302, 307) derart eingerichtet sind, dass sie zur Energieversorgung der Mehrzahl von Prozessoren (400) und/oder Sensoren (402) und/oder Aktoren verwendet werden können.

7.  Textilgewebestruktur (300) gemäß Anspruch 5 oder 6,
    bei der die leitfähigen Datenübertragungs-Fäden (304) elektrisch leitfähig sind.

8.  Textilgewebestruktur (300) gemäß Anspruch 5 oder 6,
    bei der die leitfähigen Datenübertragungs-Fäden (304) optisch leitfähig sind.

**9.** Textilgewebestruktur (300) gemäß einem der Ansprüche 5 bis 8,
bei der der Aktor als mindestens eines der folgenden Elemente eingerichtet ist:

- Bildgebendes Element, oder
- Schallwellen-Erzeugungselement, oder
- Vibrations-Erzeugungselement

**10.** Flächenverkleidungsstruktur,
bei der auf einer Textilgewebestruktur (300) gemäß einem der Ansprüche 5 bis 9 eine Flächenverkleidung fixiert ist.

**11.** Flächenverkleidungsstruktur gemäß Anspruch 10,
bei der die Flächenverkleidung auf der Textilgewebestruktur (300) aufgeklebt und/oder, auflaminiert und/oder vulkanisiert ist.

**12.** Flächenverkleidungsstruktur gemäß Anspruch 10 oder 11, bei der die Flächenverkleidungsstruktur ausgebildet ist als:

- Wand-Verkleidungsstruktur, oder
- Fußboden-Verkleidungstruktur, oder
- Decken-Verkleidungstruktur.

**13.** Flächenverkleidungsstruktur gemäß einem der Ansprüche 10 bis 12,
bei der zumindest über Teilbereichen der Textilgewebestruktur (300) eine gleichförmig mit elektrisch leitfähigen Drähten durchzogene Textillage aufgebracht ist.

**14.** Verfahren zum Übertragen von elektronischen Nachrichten (407) zwischen Prozessoren (400) einer Prozessor-Anordnung (500), welche mindestens einen Schnittstellen-Prozessor (501) aufweist, der eine Nachrichtenschnittstelle der Prozessor-Anordnung (500) bereitstellt, sowie eine Vielzahl von Prozessoren (400), die in einer Baumstruktur miteinander gekoppelt sind und elektronische Nachrichten (407) austauschen können, wobei zumindest teilweise nur die einander örtlich direkt benachbart angeordneten Prozessoren (400) miteinander zum Austausch elektronischer Nachrichten (407) gekoppelt sind, **dadurch gekennzeichnet, daß** jeder Prozessor (400) der Vielzahl von Prozessoren (400) einen ihm zugeordneten Pufferspeicher (401) aufweist, in dem eine vorgegebene Anzahl von elektronischen Nachrichten (407), welche der Prozessor (400) von einem jeden in Nachrichtenflussrichtung weg von dem Schnittstellenprozessor (501) angeordneten Nachbar-Prozessor (400) empfängt, zwischengespeichert werden können, und jedem Prozessor (400) der Vielzahl von Prozessoren (400) ein Sensor (402) und/oder ein Aktor zugeordnet und mit dem jeweiligen Prozessor (400) gekoppelt ist, wobei Sensordaten und/oder Aktordaten in den elektronischen Nachrichten (407) von bzw. zu dem Schnittstellen-Prozessor (501) übertragen werden,

- bei dem jeder Prozessor (400) der Vielzahl von Prozessoren (400) eine von einem in Nachrichtenflussrichtung hin zu dem Schnittstellenprozessor (501) angeordneten Nachbar-Prozessor (400) gesendete Erlaubnis-Nachricht (502) mit einer Erlaubnis-Angabe empfängt und verarbeitet, wobei mit der Erlaubnis-Angabe angegeben wird, wie viele elektronische Nachrichten (407) der Prozessor (400) an den Nachbar-Prozessor (400) zu einem vorgegebenen Zeitpunkt oder während eines vorgegebenen Zeitraums senden darf, und wobei die Erlaubnis-Angabe basierend auf einer Ermittlung der zukünftigen Belegung des Pufferspeichers (401) des Nachbar-Prozessors (400) ermittelt wird, und
- bei dem der Prozessor (400) nur maximal so viele elektronische Nachrichten (407) an den Nachbar-Prozessor (400) zu dem vorgegebenen Zeitpunkt oder während des vorgegebenen Zeitraums sendet, wie in der Erlaubnis-Angabe vorgegeben.

**15.** Verfahren gemäß Anspruch 14,
bei dem die Prozessoren (400) der Prozessor-Anordnung (500) synchron getaktet werden hinsichtlich der Verarbeitung und Weiterleitung einer oder mehrerer elektronischer Nachrichten (407).

## Claims

**1.** Processor arrangement (500),

• with at least one interface processor (501) which provides a message interface of the processor arrangement (500),

• with a multiplicity of processors (400) which are coupled to each other in a tree structure and can exchange electronic messages (407), wherein at least partially only the processors (400) which are locally directly adjacent are coupled with each other for the exchange of electronic messages (407), **characterized in that**

• each processor (400) of the multiplicity of processors (400) comprises a buffer memory (401) associated with it in which a specified number of electronic messages (407) which the processor (400) receives from each neighbour processor arranged in message flow direction away from the interface processor (501) may be buffered,

• for each processor (400) of the multiplicity of processors (400) a sensor (402) and/or an actor is associated and coupled with the respective processor (400) wherein sensor data and/or actor data are transmitted in the electronic messages (407) from or to the interface processor (501),

• each processor (400) of the multiplicity of processors (400) is configured such that it receives and processes an authorisation message (502) with an authorisation indication sent by a neighbour processor (400) arranged in message flow direction towards the interface processor (501), wherein it is indicated with the authorisation indication how many electronic messages (407) the processor (400) may send to the neighbour processor (400) at a specified time or during a specified time period, wherein the authorisation indication is determined based on a determination of the future allocation of the buffer memory (401) of the neighbour processor (400), and wherein the processor (400) sends at maximum as many electronic messages (407) to the neighbour processor (400) at the specified time or during the specified time period as it is specified in the authorisation indication.

2. Processor arrangement (500) according to claim 1,
   wherein the processors (400) of the processor arrangement (500) are clocked synchronously with regard to the processing and forwarding of one or more electronic messages (407).

3. Processor arrangement (500) according to claim 1 or 2,
   wherein each processor (400) of the processor arrangement (400) is configured such that in each time interval between a first clock pulse and a second clock pulse the following steps may be carried out:

   • an authorisation message (502) with an authorisation indication of the first clock pulse of the respective processor is read,
   • the allocation of the buffer memory (401) of the respective processor (400) is calculated for at least the second clock pulse,
   • a new authorisation message (502) with a new authorisation indication is formed depending on the calculated allocation of the buffer memory (401) of the respective processor (400) and is transmitted as new electronic message in message flow direction away from the interface processor (501) to a neighbour processor (400) at the second clock pulse.

4. Processor arrangement according to claim 1 or 2,
   wherein each processor (400) of the processor arrangement (500) carries out the following steps in each time interval between a first clock pulse and a second clock pulse:

   • an authorisation message (502) with an authorisation indication of the first clock pulse of the respective processor (400) is read,
   • the allocation of the buffer memory (401) of the respective processor (400) is calculated for at least the second clock pulse,
   • a new authorisation message (502) with a new authorisation indication is formed depending on the calculated allocation of the buffer memory (401) of the respective processor (400) and is transmitted as new electronic message in message flow direction away from the interface processor (501) to a neighbour processor (400) at the second clock pulse.

5. Textile fabric structure (300) with a processor arrangement (500) according to one of claims 1 to 4,

   • wherein the processors (400) and/or sensors (402) and/or actors are arranged in the textile fabric structure (300),
   • with electrically conductive threads (302, 307) which couple the processors (400) with each other,
   • with conductive data transmission threads (304) which couple the processors (400) with each other, and
   • with electrically non-conductive threads (301).

6. Textile fabric structure (300) according to claim 5,
wherein the electrically conductive threads (302, 307) are configured such that they may be used for the power supply of the plurality of processors (400) and/or sensors (402) and/or actors.

7. Textile fabric structure (300) according to claim 5 or 6,
wherein the conductive data transmission threads (304) are electrically conductive.

8. Textile fabric structure (300) according to claim 5 or 6,
wherein the conductive data transmission threads (304) are optically conductive.

9. Textile fabric structure (300) according to one of the claims 5 to 8,
wherein the actor is configured as at least one of the following elements:

   • imaging element, or
   • sonic wave generation element or
   • vibration generation element.

10. Surface paneling structure,
wherein a surface paneling is fixed on a textile fabric structure (300) according to one of the claims 5 to 9.

11. Surface paneling structure according to claim 10,
wherein the surface paneling is glued onto and/or laminated onto and/or vulcanised on the textile fabric structure (300).

12. Surface paneling structure according to claim 10 or 11,
wherein the surface paneling structure is formed as

   • wall paneling structure or
   • floor paneling structure or
   • ceiling paneling structure.

13. Surface paneling structure according to one of claims 10 to 12,
wherein a textile layer which is pervaded homogeneously with electrically conductive wires is applied over at least above portions of the textile fabric structure (300).

14. Method for transmitting electronic messages (407) between processors (400) of a processor arrangement (500) which comprises at least one interface processor (501) providing a message interface for the processor arrangement (500) and a multiplicity of processors (400) which are coupled with each other in a tree structure and can exchange electronic messages (407), wherein at least partially only the processors which are arranged locally directly adjacent are coupled with each other for the exchange of electronic messages (407), **characterized in that** each processor (400) of the multiplicity of processors (400) comprises a buffer memory (401) associated with it in which a specified number of electronic messages (407) which the processor (400) receives from each neighbour processor arranged in message flow direction away from the interface processor (501) may be buffered, and for each processor (400) of the multiplicity of processors (400) a sensor (402) and/or an actor is associated with that processor and is coupled with the respective processor (400) wherein sensor data and/or actor data are transmitted in the electronic messages (407) from or to the interface processor (501),

   • wherein each processor (400) of the multiplicity of processors (400) receives and processes an authorisation message (502) with an authorisation indication sent by a neighbour processor arranged in message flow direction towards the interface processor (501), wherein it is indicated with the authorisation indication how many electronic messages (407) the processor (400) may send to the neighbour processor (400) at a specified time or during a specified time period, and wherein the authorisation indication is determined based on a determination of the future allocation of the buffer memory (401) of the neighbour processor (400), and
   • wherein the processor (400) sends at maximum as many electronic messages (407) to the neighbour processor (400) at the specified time or during the specified time period as specified in the authorisation indication.

15. Method according to claim 14,
wherein the processors (400) of the processor arrangement (500) are clocked synchronously with regard to the processing and forwarding of one or more electronic messages (407).

**Revendications**

1. Ensemble de processeurs (500),

   • ayant au moins un processeur d'interface (501) qui fournit une interface de communication à l'ensemble de processeurs (500),
   • ayant une pluralité de processeurs (400) qui sont reliés entre eux en une structure arborescente et qui peuvent échanger des messages électroniques (407), au moins seuls les processeurs (400) directement voisins les uns des autres étant reliés entre eux pour l'échange de messages électroniques (407),

   **caractérisé par le fait que**

   • chaque processeur (400) de la pluralité de processeurs (400) comporte une mémoire tampon (401) qui lui est associée et dans laquelle peuvent être mémorisés temporairement un nombre prédéterminé de messages électroniques (407) que le processeur (400) reçoit d'un processeur voisin (400) agencé loin du processeur de communication (501) dans le sens du flux de communication,
   • un capteur (402) et/ou un actionneur sont associés à chaque processeur (400) de la pluralité de processeurs (400) et sont reliés au processeur respectif (400), des données de capteur et/ou des données d'actionneur étant transmises dans des messages électroniques (407) en provenance ou en direction du processeur d'interface (501),
   • chaque processeur (400) de la pluralité de processeurs (400) est construit de telle sorte qu'il reçoit et traite un message d'autorisation (502) émis par un processeur voisin (400) agencé en direction du processeur d'interface (501) dans le sens du flux de communication et comprenant une indication d'autorisation, l'indication d'autorisation indiquant combien de messages électroniques (407) le processeur (400) peut envoyer au processeur voisin (400) à un instant prédéterminé ou pendant un intervalle de temps prédéterminé, l'indication d'autorisation étant déterminée sur la base d'une détermination de l'occupation future de la mémoire tampon (401) du processeur voisin (400) et le processeur (400) n'envoyant au maximum au processeur voisin (400) à l'instant prédéterminé ou pendant l'intervalle de temps prédéterminé que le nombre de messages électroniques (407) prédéterminé dans l'indication d'autorisation.

2. Ensemble de processeurs (500) selon la revendication 1, tel que les processeurs (400) de l'ensemble de processeurs (500) sont synchronisés du point de vue du traitement et de la retransmission d'un ou plusieurs messages électroniques (407).

3. Ensemble de processeurs (500) selon la revendication 1 ou 2, tel que chaque processeur (400) de l'ensemble de processeurs (400) est construit de telle sorte que, dans chaque intervalle de temps compris entre un premier top d'horloge et un deuxième top d'horloge, les étapes suivantes peuvent être exécutées :

   • un message d'autorisation (502) comprenant une indication d'autorisation du premier top d'horloge du processeur respectif (400) est enregistré,
   • l'occupation de la mémoire tampon (401) du processeur respectif (400) pour au moins le deuxième top d'horloge est calculé,
   • un nouveau message d'autorisation (502) avec une nouvelle indication d'autorisation est formé en fonction de l'occupation calculée de la mémoire tampon (401) du processeur respectif (400) et il est transmis au deuxième top d'horloge en tant que nouveau message électronique à un processeur voisin (400) loin du processeur d'interface (501) dans le sens du flux de communication.

4. Ensemble de processeurs selon la revendication 1 ou 2, tel que chaque processeur (400) de l'ensemble de processeurs (500) exécute les étapes suivantes dans chaque intervalle de temps compris entre un premier top d'horloge et un deuxième top d'horloge :

   • un message d'autorisation (502) comprenant une indication d'autorisation du premier top d'horloge du processeur respectif (400) est enregistré,
   • l'occupation de la mémoire tampon (401) du processeur respectif (400) pour au moins le deuxième top d'horloge est calculée,

• un nouveau message d'autorisation (502) avec une nouvelle indication d'autorisation est formé en fonction de l'occupation calculée de la mémoire tampon (401) du processeur respectif (400) et il est transmis au deuxième top d'horloge en tant que nouveau message électronique à un processeur voisin (400) loin du processeur d'interface (501) dans le sens du flux de communication.

5. Structure de tissu textile (300) ayant un ensemble de processeurs (500) selon l'une des revendications 1 à 4,

   • telle que les processeurs (400) et/ou capteurs (402) et/ou actionneurs sont placés dans la structure de tissu textile (300),
   • ayant des fils électriquement conducteurs (302, 307) qui relient entre eux les processeurs (400),
   • ayant des fils conducteurs de transmission de données (304) qui relient entre eux les processeurs (400), et
   • ayant des fils non électriquement conducteurs (301).

6. Structure de tissu textile (300) selon la revendication 5, telle que les fils électriquement conducteurs (302, 307) sont construits de telle sorte qu'ils peuvent être utilisés pour l'alimentation en énergie des processeurs (400) et/ou des capteurs (402) et/ou actionneurs.

7. Structure de tissu textile (300) selon la revendication 5 ou 6, telle que les fils conducteurs de transmission de données (304) sont électriquement conducteurs.

8. Structure de tissu textile (300) selon la revendication 5 ou 6, telle que les fils conducteurs de transmission de données (304) sont optiquement conducteurs.

9. Structure de tissu textile (300) selon l'une des revendications 5 à 8, telle que l'actionneur est construit sous la forme d'au moins l'un des éléments suivants :

   • élément formant une image, ou
   • élément de production d'ondes sonores, ou
   • élément de production de vibrations.

10. Structure d'habillage de surface, telle qu'un habillage de surface est fixé sur une structure de tissu textile (300) selon l'une des revendications 5 à 9.

11. Structure d'habillage de surface selon la revendication 10, telle que l'habillage de surface est collé et/ou lamellé et/ou vulcanisé sur la structure de tissu textile (300).

12. Structure d'habillage de surface selon la revendication 10 ou 11, telle que la structure d'habillage de surface est conçue comme :

   • structure d'habillage de mur, ou
   • structure d'habillage de plancher, ou
   • structure d'habillage de plafond.

13. Structure d'habillage de surface selon l'une des revendications 10 à 12, telle qu'une couche textile parcourue uniformément par des fils électriquement conducteurs est appliquée au moins sur des zones partielles de la structure de tissu textile (300).

14. Procédé pour la transmission de messages électroniques (407) entre des processeurs (400) d'un ensemble de processeurs (500) qui comporte au moins un processeur d'interface (501) fournissant une interface de communication à l'ensemble de processeurs (500) et une pluralité de processeurs (400) qui sont reliés entre eux en une structure arborescente et qui peuvent échanger des messages électroniques (407), au moins seuls les processeurs (400) directement voisins les uns des autres étant reliés entre eux pour l'échange de messages électroniques (407), **caractérisé par le fait que**

   • chaque processeur (400) de la pluralité de processeurs (400) comporte une mémoire tampon (401) qui lui est associée et dans laquelle peuvent être mémorisés temporairement un nombre prédéterminé de messages électroniques (407) que le processeur (400) reçoit d'un processeur voisin (400) agencé loin du processeur de communication (501) dans le sens du flux de communication,

• un capteur (402) et/ou un actionneur sont associés à chaque processeur (400) de la pluralité de processeurs (400) et sont reliés au processeur respectif (400), des données de capteur et/ou des données d'actionneur étant transmises dans des messages électroniques (407) en provenance ou en direction du processeur d'interface (501),

• chaque processeur (400) de la pluralité de processeurs (400) reçoit et traite un message d'autorisation (502) émis par un processeur voisin (400) agencé en direction du processeur d'interface (501) dans le sens du flux de communication et comprenant une indication d'autorisation, l'indication d'autorisation indiquant combien de messages électroniques (407) le processeur (400) peut envoyer au processeur voisin (400) à un instant prédéterminé ou pendant un intervalle de temps prédéterminé, l'indication d'autorisation étant déterminée sur la base d'une détermination de l'occupation future de la mémoire tampon (401) du processeur voisin (400), et

• le processeur (400) n'envoie au maximum au processeur voisin (400) à l'instant prédéterminé ou pendant l'intervalle de temps prédéterminé que le nombre de messages électroniques (407) prédéterminé dans l'indication d'autorisation.

15. Procédé selon la revendication 14, tel que les processeurs (400) de l'ensemble de processeurs (500) sont synchronisés du point de vue du traitement et de la retransmission d'un ou plusieurs messages électroniques (407).

FIG 1

EP 1 652 104 B1

| (11,0) | (11,1) | (11,2) | ✕ | (11,4) | (11,5) | (11,6) | (11,7) | (11,8) | (11,9) | (11,10) | (11,11) | (11,12) | (11,13) | (11,14) | (11,15) |
| (10,0) | (10,1) | (10,2) | ✕ | ✕ | ✕ | (10,6) | (10,7) | (10,8) | (10,9) | (10,10) | (10,11) | (10,12) | (10,13) | (10,14) | (10,15) |
| (9,0) | (9,1) | (9,2) | ✕ | ✕ | ✕ | (9,6) | (9,7) | (9,8) | ✕ | ✕ | (9,11) | (9,12) | (9,13) | (9,14) | (9,15) |
| (8,0) | (8,1) | (8,2) | (8,3) | ✕ | ✕ | (8,6) | (8,7) | (8,8) | (8,9) | ✕ | (8,11) | (8,12) | (8,13) | (8,14) | (8,15) |
| (7,0) | (7,1) | (7,2) | (7,3) | ✕ | (7,5) | (7,6) | (7,7) | (7,8) | (7,9) | ✕ | ✕ | (7,12) | (7,13) | (7,14) | (7,15) |
| (8,0) | (8,1) | (8,2) | (8,3) | (8,4) | (8,5) | (8,6) | (8,7) | (8,8) | (8,9) | (8,10) | (8,11) | (8,12) | (8,13) | (8,14) | (8,15) |
| (9,0) | (9,1) | (9,2) | (9,3) | (9,4) | (9,5) | (9,6) | (9,7) | (9,8) | (9,9) | (9,10) | (9,11) | (9,12) | (9,13) | (9,14) | (9,15) |
| (4,0) | (4,1) | (4,2) | (4,3) | (4,4) | (4,5) | (4,6) | (4,7) | (4,8) | ✕ | ✕ | (4,11) | (4,12) | (4,13) | (4,14) | (4,15) |
| (3,0) | (3,1) | (3,2) | (3,3) | (3,4) | (3,5) | (3,6) | (3,7) | ✕ | ✕ | (3,10) | (3,11) | (3,12) | (3,13) | (3,14) | (3,15) |
| (2,0) | (2,1) | (2,2) | (2,3) | (2,4) | (2,5) | (2,6) | ✕ | ✕ | (2,9) | (2,10) | (2,11) | (2,12) | (2,13) | (2,14) | (2,15) |
| (1,0) | (1,1) | (1,2) | (1,3) | (1,4) | (1,5) | (1,6) | ✕ | (1,8) | (1,9) | (1,10) | (1,11) | (1,12) | (1,13) | (1,14) | (1,15) |
| (0,0) | (0,1) | (0,2) | (0,3) | (0,4) | (0,5) | (0,6) | ✕ | (0,8) | (0,9) | (0,10) | (0,11) | (0,12) | (0,13) | (0,14) | (0,15) |

105
100
101
104
103
102

FIG 2

FIG 3

305    301    300

a)    c)

302
304
307
303

b)    d)

302
306    304
307

307    302    307    303
304          304  302

FIG 4

Uplink 2

Uplink 1    406    Uplink k

Uplink    406

407    406    Kapazität c

303    404    Puffergröße b_max

402    Node

403    400    401

Downlink    Kapazität c

407    406

Datenfluss-Richtung

405

FIG 5

FIG 6

FIG 7

FIG 8

EP 1 652 104 B1

FIG 9

EP 1 652 104 B1

FIG 10

FIG 11

FIG 12

FIG 13

FIG 14

EP 1 652 104 B1

FIG 15

FIG 16

FIG 17

300

307    304    307

303    302    302

307    302

302    304

1700

307    302

304    303

303    307

303    304    302

FIG 18

EP 1 652 104 B1

303  303  1800

303

302, 304, 307

302, 304, 307

1801  1802

| (11,0) | (11,1) | (11,2) |  | (11,4) | (11,5) | (11,6) | (11,7) | (11,8) | (11,9) | (11,10) | (11,11) | (11,12) | (11,13) | (11,14) | (11,15) |
| (10,0) | (10,1) | (10,2) |  |  | (10,6) | (10,7) | (10,8) | (10,9) | (10,10) | (10,11) | (10,12) | (10,13) | (10,14) | (10,15) |
| (9,0) | (9,1) | (9,2) |  | (9,6) | (9,7) | (9,8) |  | (9,11) | (9,12) | (9,13) | (9,14) | (9,15) |
| (8,0) | (8,1) | (8,2) | (8,3) |  | (8,6) | (8,7) | (8,8) | (8,9) |  | (8,11) | (8,12) | (8,13) | (8,14) | (8,15) |
| (7,0) | (7,1) | (7,2) | (7,3) |  | (7,5) | (7,6) | (7,7) | (7,8) | (7,9) |  | (7,12) | (7,13) | (7,14) | (7,15) |
| (8,0) | (8,1) | (8,2) | (8,3) | (8,4) | (8,5) | (8,6) | (8,7) | (8,8) | (8,9) | (8,10) | (8,11) | (8,12) | (8,13) | (8,14) | (8,15) |
| (9,0) | (9,1) | (9,2) | (9,3) | (9,4) | (9,5) | (9,6) | (9,7) | (9,8) | (9,9) | (9,10) | (9,11) | (9,12) | (9,13) | (9,14) | (9,15) |
| (4,0) | (4,1) | (4,2) | (4,3) | (4,4) | (4,5) | (4,6) | (4,7) | (4,8) |  | (4,11) | (4,12) | (4,13) | (4,14) | (4,15) |
| (3,0) | (3,1) | (3,2) | (3,3) | (3,4) | (3,5) | (3,6) | (3,7) |  | (3,10) | (3,11) | (3,12) | (3,13) | (3,14) | (3,15) |
| (2,0) | (2,1) | (2,2) | (2,3) | (2,4) | (2,5) | (2,6) |  | (2,9) | (2,10) | (2,11) | (2,12) | (2,13) | (2,14) | (2,15) |
| (1,0) | (1,1) | (1,2) | (1,3) | (1,4) | (1,5) | (1,6) |  | (1,8) | (1,9) | (1,10) | (1,11) | (1,12) | (1,13) | (1,14) | (1,15) |
| (0,0) | (0,1) | (0,2) | (0,3) | (0,4) | (0,5) | (0,6) |  | (0,8) | (0,9) | (0,10) | (0,11) | (0,12) | (0,13) | (0,14) | (0,15) |

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 0348953 A2

### In der Beschreibung aufgeführte Nicht-Patentliteratur

- **J. M. RABAEY et al.** Pico Radio Supports ad hoc ultra-low power wireless networking. *I Triple E Computer,* 2000, vol. 33 (7), 42-48
- **J. M. RABAEY et al.** Pico Radios for wireless sensor networks: The next challenge in ultra-low power design. *ISSCC,* 2002
- **S. MADDEN et al.** Tag: A tiny aggregation service for athock sensor networks. *Technical report, Inter research IRB-TR-02-011,* August 2002
- Quantum Flow Control. *Quantum Flow Control Version 2.0,* 25. Juli 1995, vol. XX (XX
- A novel flow control and switching strategy for preventing hotspot congestion in multistage networks. **A. POMBORTSIS et al.** Microprocessors and Microsystems. IPC Business Press Ltd, 01. September 1993, vol. 17, 403-410